# EUROPEAN PATENT SPECIFICATION

(11) **EP 2 857 967 B1**
(45) Date of publication and mention of the grant of the patent: **04.12.2019**
(21) Application number: 14187744.9
(22) Date of filing: 06.10.2014
(51) Int. Cl.: G06F 8/61, G06F 3/0484

(54) **User interface management method and system**
Verfahren und System zur Verwaltung einer Benutzerschnittstelle.
Procédé et système pour la gestion d'une interface utilisateur.

(30) Priority: 04.10.2013 US 201361886892 P; 30.12.2013 US 201314143906
(43) Date of publication of application: 08.04.2015
(73) Proprietor: Samsung Electronics Co., Ltd., Gyeonggi-do 443-742 (KR)
(72) Inventor: Kosmiskas, Mario, San Mateo, CA 94402 (US); Sankaranarasimhan, Manikandan, Fremont, CA 94555 (US); Patel, Naman Rajeshbhal, Santa Clara, CA 95051 (US); Gogl, Santosh, Santa Clara, CA 95054 (US); Petzel, Craig, San Jose, CA 95112 (US)
(74) Representative: HGF Limited

(56) References cited:
- US-A1- 2012 129 503

## Description

### TECHNICAL FIELD

Various embodiments of the present invention relate to managing a user interface at a mobile device.

### BACKGROUND

Mobile devices such as, for example, smart phones may provide various functionalities to users. As the available number of functionalities increases, users may wish to manage such functionalities more effectively.

US-2012/129503-A1 discloses a mobile device management system allows network administrators to control the distribution and publication of applications to mobile device users in an enterprise network.

### SUMMARY

According to a first aspect of the present invention there is provided a method comprising: receiving an input associated with a user via an electronic device corresponding to the user, the input comprising a selection of a persona, wherein a persona comprises a sub-environment under a user environment corresponding to the user; determining a first persona associated with the user corresponding to the selected persona; and providing in response to the input a first set of applications or data corresponding to the determined first persona; wherein application behavior is restricted based on the determined persona.

According to a second aspect of the present invention there is provided an apparatus, comprising: an input module configured to receive an input associated with a user via an electronic device corresponding to the user, the input comprising a selection of a persona, wherein a persona comprises a sub-environment under a user environment corresponding to the user; a determining module configured to determine a first persona associated with the user corresponding to the selected persona; and a providing module configured to provide in response to the input a first set of applications or data corresponding to the determined first persona; wherein application behavior is restricted based on at least one policy set according to the determined persona.

The providing may comprise: allocating a first portion of memory associated with the electronic device to the first persona; and allocating a second portion of the memory different from the first portion to the second persona.

The providing may comprise: providing a first function of at least one application common to the first and second sets of applications based on a determination that the mode is associated with the first persona; and providing a second function of the at least one application based on a determination that the mode is associated with the second persona.

The providing may comprise: applying a first set of security requirements associated with the electronic device based on a determination that the mode is associated with the first persona; and applying a second set of security requirements associated with the electronic device based on a determination that the mode is associated with the second persona.

The method or apparatus may further comprise: logging, by a logging module, in the user to the first persona and the second persona in relation with the electronic device in response to same information associated with the user.

The method or apparatus may further comprise: switching, by switch module, the mode between the first persona and the second persona while logged in using the same user information.

The method or apparatus may further comprise: switching, by switch module, the mode between at least one of the first or the second persona and a persona associated with another user.

The method or apparatus may further comprise: generating, by a generating module, at least one of the first or the second persona as a personal persona.

The providing may comprise: storing data associated with the first persona as non-encrypted; and storing data associated with the second persona as encrypted based at least in part on a token associated with the user.

The token may be a password.

The providing may comprise: selectively removing data associated with the second persona while preserving data associated with the first persona.

The providing may comprise: presenting the first data imported into the area associated with the second persona in a format different from the format to be presented in the area associated with the first persona.

The providing may comprise: providing at least a portion of the first set of applications or data, or at least a portion of the second set of applications or data, in a mode other than a mode associated with the first persona or the second persona, respectively.

The providing may comprise: stripping at least a portion of the at least a portion of the first set or the at least a portion of the second set.

Another aspect of the present invention is to provide a non-transitory computer-readable medium storing instructions when executed by one or more processors cause the one or more processors to perform operations to implement the above method.

Another aspect of the invention provides a computer program comprising instructions arranged, when executed, to implement a method in accordance with any one of the above-described aspects. A further aspect provides machine-readable storage storing such a program.

### BRIEF DESCRIPTION OF THE DRAWINGS

The above and other aspects, features, and advantages the present invention will be more apparent from the following description taken in conjunction with the accompanying drawings.
FIG. 1 shows a conceptual diagram of an electronic device according to various embodiments of the present invention;
FIG. 2 shows a block diagram of an electronic device according various embodiments of the present invention;
FIG. 3A shows a setting menu for changing personas according to an embodiment of the present invention;
FIG. 3B shows a quick settings panel for switching users according to an embodiment of the present invention;
FIG. 3C shows a "switch persona" tile according to an embodiment of the present invention;
FIG. 3D shows a user interface for changing personas according to an embodiment of the present invention;
FIG. 3E shows a schematic diagram of a standard persona (standard mode) and a customized persona (customized mode) according to an embodiment of the present invention;
FIG. 3F shows information sharing across separate environment/ sandbox/ groups/ isolation/ user/ persona in same user device according to an embodiment of the present invention;
FIG. 3G shows a flow chart of information flow across isolated environment between a sync & provider for a particular entity according to an embodiment of the present invention;
FIG. 3H shows the interaction of same component when the environments reside on different user devices according to an embodiment of the present invention;
FIG. 4A shows a conceptual diagram of a persona framework according to an embodiment of the present invention;
FIG. 4B shows a flowchart for a persona's creation, removal and update according to an embodiment of the present invention;
FIG. 4C shows a two-layer relationship in plain persona framework according to an embodiment of the present invention;
FIG. 4D shows a flowchart of a user accessing personas in a single-user system according to an embodiment of the present invention;
FIG. 4E shows a flow chart for switching personas between users in a multi-user system according to an embodiment of the present invention;
FIG. 5 shows multiple-layered security according various embodiments of the present invention according to an embodiment of the present invention;
FIG. 6A shows sharing data between personas within RCP service framework (in privacy mode) according to an embodiment of the present invention;
FIG. 6B shows sharing data between personas within RCP service framework (in open/public mode) according to an embodiment of the present invention;
FIG. 6C shows the basic structure of RCP service framework (with data-sharing model-1) according to an embodiment of the present invention;
FIG. 6D shows user actions (user cases) for RCP service according to an embodiment of the present invention;
FIG. 6E shows data sharing model-2 with RCP service framework according to an embodiment of the present invention;
FIG. 7 shows a flowchart according various embodiments of the present invention according to an embodiment of the present invention;
FIG. 8 shows block architecture of an electronic device according to various embodiments of the present invention according to an embodiment of the present invention; and
FIG. 9 shows a block diagram of an electronic device according various embodiments of the present invention.

Throughout the drawings, like reference numerals will be understood to refer to like parts, components, and structures.

### DETAILED DESCRIPTION

Detailed descriptions of the various aspects of the present invention will be discussed below with reference to the attached drawings. The descriptions are set forth as examples only, and shall not limit the scope of the present invention. With respect to the description of the drawings, like features are referenced with like numerals.

As used in the present invention, terms such as "includes" or "may include" refer to the presence of the corresponding function, operation or feature, and do not limit the presence of additional functions, operations or features. Also, terms such as "includes" or "has" refers to the presence of characteristics, numbers, steps, operations, components or combinations thereof, and is not intended to exclude one or more additional characteristics, numbers, steps, operations, components or combinations thereof.

As used in the present invention, the term "or" is used to include any and all combination of terms listed. For examples, "A or B" includes only A, only B, or both A and B. As used in the present invention, terms such as "first" or "second" may be used to describe various features, but do not limit such features. For example, the terms do not limit the order and/or the importance of their associated features. Such terms may be used to differentiate one feature from another. For example, a first user equipment and a second user equipment are both user equipment's, but are different user equipment's. For example, without departing from the scope of the present invention, a first component may be called a second component, and likewise, a second component may be called a first component.

If a component is said to be "connected with" or "connected to" another component, the component may be directly connected with, or connected to, the another component, or another component may exist in between. On the other hand, if a component is said to be "directly connected with" or "directly connected to" another component, it should be understood that no components exist in between.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Terms as used in the present invention are used to describe the various embodiments of the present invention, and are not intended to limit the present invention. Singular terms are intended to include plural forms, unless the context makes it clear that plural forms are not intended.

Unless defined differently, all terms used in the present invention, including technical or scientific terms, have meanings that are understood generally by a person having ordinary skill in the art. Ordinary terms that may be defined in a dictionary should be understood to have the meaning consistent with their context, and unless clearly defined in the present invention, should not be interpreted to be excessively idealistic or formalistic.

It will be appreciated from the following description that, in certain embodiments of the invention, features concerning the graphic design of user interfaces are combined with interaction steps or means to achieve a technical effect.

It will be appreciated from the following description that, in certain embodiments of the invention, graphic features concerning technical information (e.g. internal machine states) are utilised to achieve a technical effect.

Certain embodiments aim to achieve the technical effect of enhancing the precision of an input device.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

An electronic device according to the present invention may include communication functionality. For example, an electronic device according to the present invention may be a smart phone, tablet personal computer ("PC"), mobile phone, video phone, e-book reader, desktop PC, laptop PC, netbook PC, personal digital assistant ("PDA"), portable multimedia player ("PMP"), mp3 player, mobile medical device, camera, or a wearable device (e.g., head-mounted device ("HMD"), electronic clothes, electronic braces, electronic necklace, electronic accessory, electronic tattoo or smart watch).

According to various embodiments, an electronic device may be a smart home appliance with communication functionality. A smart home appliance may be, for example, a television, digital video disk ("DVD") player, audio, refrigerator, air conditioner, vacuum cleaner, oven, microwave oven, washer, dryer, air purifier, set-top box, TV box (e.g., Samsung HomeSync™, Apple TV™, or Google TV™), gaming console, electronic dictionary, electronic key, camcorder, or electronic picture frame.

According to various embodiments, an electronic device may be a medical device (e.g., magnetic resonance angiography ("MRA") device, magnetic resonance imaging ("MRI") device, computed tomography ("CT") device, imaging device, or ultrasonic device), navigation device, global positioning system ("GPS") receiver, event data recorder ("EDR"), flight data recorder ("FDR"), automotive infotainment device, naval electronic device (e.g., naval navigation device, gyroscope or compass), avionic electronic device, security device, or industrial or consumer robot.

According to various embodiments, an electronic device may be furniture, part of a building/structure, an electronic board, electronic signature receiving device, projector, or various measuring devices (e.g., water, electricity, gas or electro-magnetic wave measuring devices), that include communication functionality.

An electronic device according to the present invention may be any combination of the foregoing devices. In addition, it will be apparent to one having ordinary skill in the art that an electronic device according to the present invention is not limited to the foregoing devices.

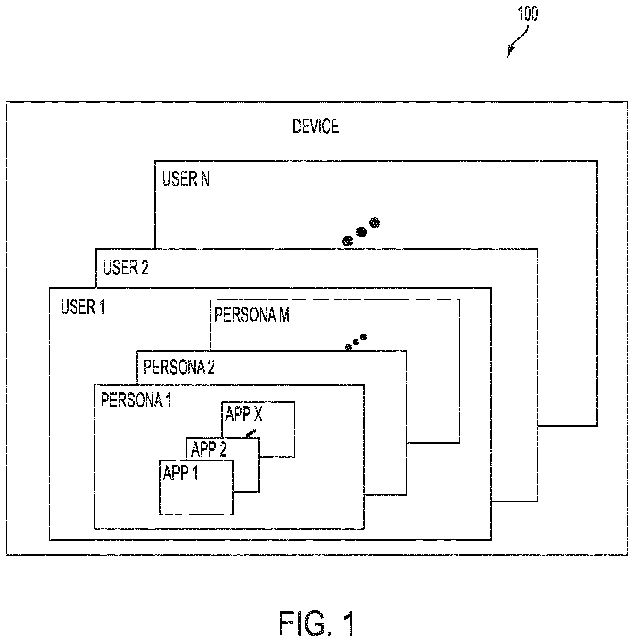

FIG. 1 shows an electronic device 100 according to various embodiments of the present invention. Device 100 may be associated with one or more users. FIG. 1 shows that device 100 is associated with user N users (user 1 ∼ user N; N may be any natural number). A user may be associated with zero (0), one (1) or more personas. FIG. 1 shows that user 1 of device 100 is associated with M personas (persona 1 ∼ persona M; M may be any natural number). Other users (e.g., user 2 ∼ user N) may also be associated with zero, one or more personas. Personas will be described in further detail below.

A persona may be associated with zero, one or more apps. FIG. 1 shows that persona 1 of user 1 (of device 100) is associated with X apps (app 1 ∼ app X; X may be any natural number). Other personas of user 1 (e.g., persona 2 ∼ persona M) may also be associated with zero, one or more apps. The personas may also be associated with various types of data.

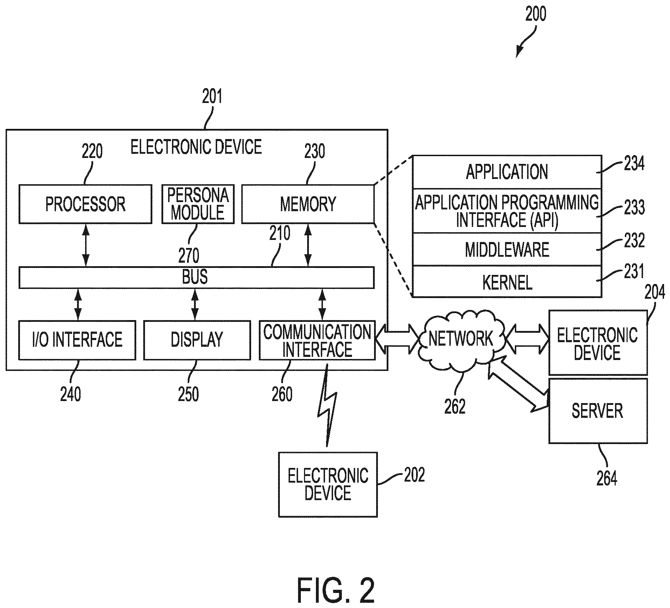

FIG. 2 shows electronic device 200 according to various embodiments of the present invention. Electronic device 200 may be, for example, electronic device 100. Referring to FIG. 2, electronic device 200 may include bus 210, processor 220, memory 230, input/output ("I/O") interface 240, display 250, communication interface 260 and persona module 270.

Bus 210 may be circuitry that connect the foregoing components and allow communication (e.g., send control messages) between the foregoing components.

Processor 220 may, for example, receive instructions from other components (e.g., memory 230, I/O interface 240, display 250 or communication interface 260), interpret the received instructions and execute computation or data processing according to the interpreted instructions.

Memory 230 may, for example, store instructions or data that are received from, or generated by, other components (e.g., memory 230, I/O interface 240, display 250 or communication interface 260). For example, memory 230 may include programming modules such as kernel 231, middleware 232, application programming interface ("API") 233 or application 234. Each of the foregoing programming modules may include a combination of at least two of software, firmware or hardware.

Kernel 231 may control or manage system resources (e.g., bus 210, processor 220 or memory 230) that may be used in executing operations or functions implemented in other programming modules such as, for example, middle ware 232, API 233 or application 234. Also, kernel 231 may provide an interface for allowing middleware 232, API 233 or application 234 to access individual components of electronic device 200.

Middleware 232 may be a medium through which the kernel 231 may communicate with API 233 or application 234 to send and receive data. Also, middleware 232 may control (e.g., scheduling or load balancing) work requests by one or more applications 234 by, for example, assigning priorities for using system resources (bus 210, processor 220 or memory 230) of electronic device 200 to the one or more applications 234.

API 233 is an interface that may control functions that application 234 may provide at kernel 231 or middleware 232. For example, API 233 may include at least an interface or function (e.g., command) for file control, window control, video processing or character control.

I/O interface 240, for example, may receive instruction or data from a user and send, via bus 210, to processor 220 or memory 230. Also, I/O interface 240 may output audio information received, via bus 210, from memory 230 or communication interface 260.

Display 250 may display image, video or data to the user.

Communication interface 260 may provide communication between electronic device 200 and one or more other electronic devices 202. Communication interface 260 may support specified communication protocol (e.g., Wi-Fi, Wi-Fi Direct, WiGig, BT, BLE, Zigbee, UWB, NFC, RFID, Audio Sync, EFC, HBC or VLC), or network communication 262. Network communication 262 may be, for example, Internet, local area network ("LAN"), wide area network ("WAN"), telecommunication network, cellular network, satellite network or plain old telephone service ("POTS") network.

Persona module 270 may be configured to, for example, receive an input associated with a user and determine one or more personas associated with the user. The one or more personas may include a first persona and a second persona. Persona module 270 may further be configured to provide, in response to the input, a first set of applications or data, a second set of applications or data, based on a determination that the electronic device is in a mode associated with the first persona or the second persona, respectively.

According to various embodiments of the present invention, a virtual environment in mobile devices is provided. Various embodiments of the present invention may include multiple features and concepts that enhance the security, usability and convenience of the virtual environment.

The present invention addresses, among others, the following topics:
1. Creating a virtual space to isolate data, preferences and applications
2. Based on policies, protecting data, communication and restrict application behaviour in the virtual space.
3. Providing a way to manage, monitor and enforce policies on the virtual space remotely.
4. Providing a way to easily move in and out of the virtual space.

Various terms or phrases listed below include their plain and ordinary meanings including, but not limited to, the descriptions provided below each corresponding term:

A "user" may represent a user of a device (e.g., device 100). A human user of the device may be referred to as an end-user/consumer. Multiple end users may be associated with the same device. Each end user may be represented by a user in the device. A numeral may be appended to the user for unique identification (e.g., user0, user1, etc.)

A user may have the following characteristics:
1. A device can have one or more users.
2. A device may have at least one user.
3. Each user may be identified uniquely in the device.
4. A super user (user with special privileges) can create/manage other users.
5. At any given instance only one user may be active.
6. An end user can switch between users.
7. Users may not share data between each other.
8. Settings and preferences of a user are may not be shared with other users.

A "persona" represents a user personality. A user can create a persona to organize applications/features which are related based on user's needs, security requirements or any other common behaviour. For example, a personal persona can be a persona where applications/ features are private to the user, while a work persona can be a collection of applications/features which are shared between the user and an organization. Security policies and restrictions can be applied to personas as a whole and policies can be enforced remotely without affecting other persona or users.

A persona framework may be implemented as a subsystem of a platform according to various embodiments of the present invention (e.g., Android) which allows a user to create separate environments under its profile. Each persona may provide a fully isolated environment under the control of the main user. Each environment may have its own set of preferences, apps and data, all of which might differ from the main user's set. On multiuser systems each user can create its own set of personas.

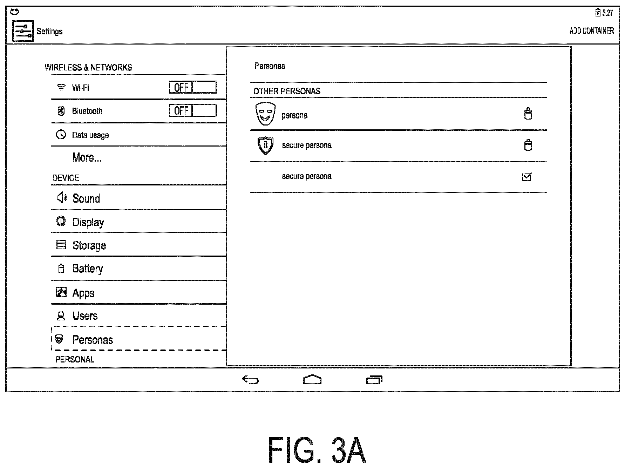

FIG. 3A shows a setting menu for changing personas. A user may have no persona, in which case the user may be provided with a single user (virtual) environment. A user may also have one or more personas and may still be able to be presented with a user environment which may not be referred to as a "persona". Such a user environment may be a referred to as a default persona, or simply, a "user." Throughout the present invention, depending on the context, the term "user" may represent a physical user using an electronic device, or may represent a user (virtual) environment which is not associated with a persona.

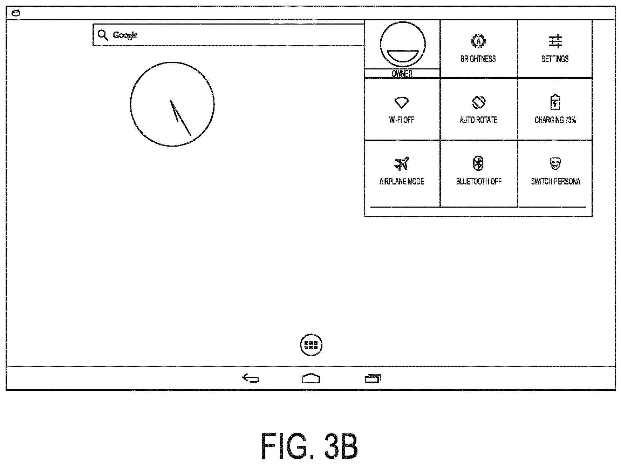

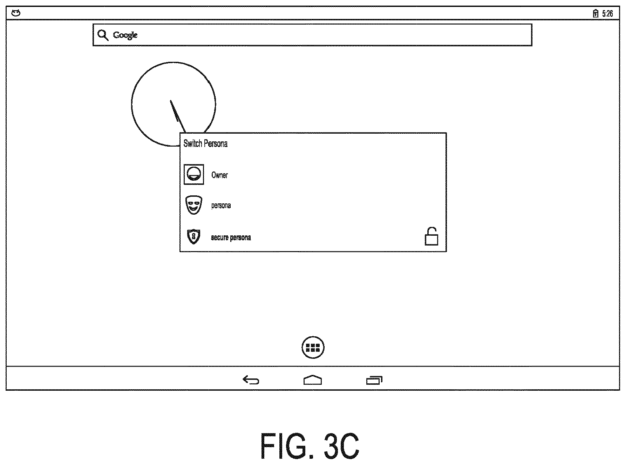

A user may have full control over its personas. In some embodiments, no authentication may be needed when switching from the user to any of its personas, or between personas. Within a user's or persona's environment there may be a way to switch among personas. In an embodiment, a quick settings panel (e.g., Quick Settings panel in the Android™ operating system ("OS")). After selecting a "switch persona" tile the user may be presented with a list of personas. FIG. 3B shows a quick settings panel according to various embodiments of the present invention for switching users. FIG. 3C shows "switch persona" tile according to various embodiments of the present invention.

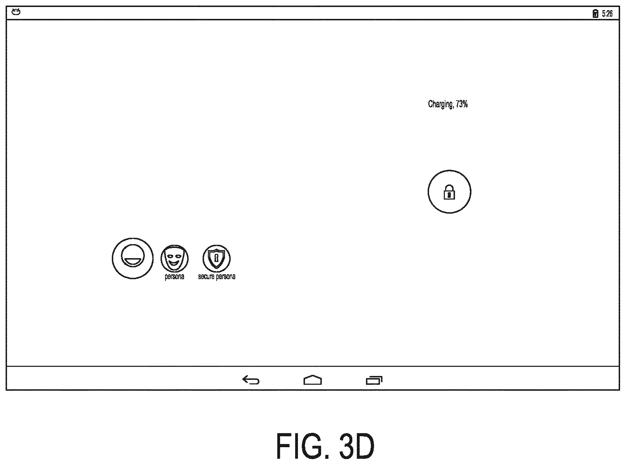

Selecting a persona may switch the environment automatically. FIG. 3D shows a user interface for changing personas. Before a user gains access to a persona he/she may need to log in using an authentication mechanism configured for the selected user. The same may apply for single or multiuser environments. As an aid to the user the desired target persona may be selected at the log in screen before, during, the user authentication process. In one embodiment, the set of available personas may be presented to a user through, for example, a lock screen widget. Regardless of the persona the user is currently using, all communication received and sent to and from the electronic device may be for the same individual (e.g., user).

Personas with different settings can be preconfigured and presented to a user at the time of creation. Specific persona types might enforce strict authentication policies and present the user with a challenge (e.g., request a token from a secondary device) before allowing access to the persona. Other types may not have such requirements, or may have other types of requirements.

Example characteristics of persona may be:
1. A persona is owned by a user.
2. A user can have 0 or more persona.
3. Applications/features which are part of a persona are governed by the same preference/policies.
4. Persona can be of multiple types depending on the features/characteristics. For example, a persona with high level of security that can be controlled by a mobile device management ("MDM") may be called a secure persona.
5. A persona can be created by end users.
6. Data sharing between personas may be governed/con by policies.
7. Removing a persona may remove all or some applications/features/policies of the persona.

A term "policy" is a behaviour that can be enforced when certain conditions are met. For example:
1. "Camera should be disabled in work environment".
2. "In order to use enterprise email, the device must be locked with a PIN".

The above statements may be policies which can be enforced by the device when the respective criteria are met. Policies can be used to restrict or enable features. Policies can be applied remotely.

When a policy is set it can may only be modified by the same entity which applied the policy. In a platform according various embodiments of the present invention (e.g., Android platform), the following statement may enable policy enforcement.
1. "In order to set a policy the entity must be an administrator for the user/persona".
2. "When two administrators apply the same policy, the strictest of them will be enforced."

The platform may ensure isolation of data and communication between users, as part of a multi-user framework. The persona framework optionally supports a secure file system, for example, with EcryptFS. With the secure file system, the user data space may be mounted to a secure partition (e.g., a secure EcryptFS partition), where data may be encrypted and decrypted on the fly.

User may be forced to provide a password, or otherwise pass other types of security measures, to access a secure persona. Various embodiments of the present invention may support a secured external SD card. In a standard persona, the SD card may be shared with rest of the device. In a secure persona, the external SD card may be isolated and encrypted.

Persona Identity may uniquely identify the persona within the device. The Identity is a collection of persona attributes which allow a persona to be uniquely identifiable within the device. Examples of these attributes are:
Persona ID - unique identifier of the user space within the device.
UserID - unique identifier of the user space of the persona owner.
EmailID - unique email ID of the user which is identifiable in the enterprise.

The identity of persona may be represented, for example, as a hash value which combines the various unique identities of the virtual space. For example, to represent a virtual space, the IMEI, persona ID, enterprise email ID may be combined, and a hash may be generated based on the combination. This encrypted hash may be shared with other services such as, for example, a remote MDM, that may have a need to uniquely identify the virtual space. All communication between remote services and the device may have the hash encoded. On the device, the hash may be decrypted and the various identifiers may be reassembled to uniquely identify the virtual space.

The state of the persona may determine user interaction with the persona. Some or all of the components of the persona may be aware of the state and behave accordingly. Example basic state values for persona may be:
1. PERSONA_INITIALIZED
2. PERSONA_ACTIVE
3. PERSONA_INACTIVE
4. PERSONA_UNAVAILABLE

Apart from these states, there could be other state transitions, which are internal to the persona. When the persona is in an intermediate state, it will be published as PERSONA_UNAVAILABLE to all external components. A persona state manager may be provided and manage the persona state and may be responsible for triggering state transitions.

Packages or apps refer to the applications installed in the persona. Packages may have a UI and respond to user input (e.g., touch) or can be background applications that usually do not receive user interaction. A persona package component may be provided and may be responsible for package/app management functionalities for a persona. Package management may include installation, uninstallation, permissions, data store, etc., for persona packages. It may also be responsible for managing the application identity in terms of signature verification, etc. A persona package manager component may be provided and be responsible for some or all package-related activities in persona.

A no leak persona is a persona, where all aspects of persona may reside inside the persona. The no leak persona may include, for example, a .dex file and all aspects of framework which maintain state.

Dynamic system services may be customized system services for persona. A new system service may be created that may be, for example, an extension of an existing system service. The dynamic system services may be instantiated and cached by the system server with, for example, a key name different than the original service. At the instance, when the user switches to the virtual space/persona/user, the following example operations may be performed:
1. The system service instances are swapped between the original and the extended service.
2. Trigger the context to rebind the manager to the service.
3. The manager may bind to the extended service and not to the original service.
4. When the manager binds to the extended service, some or all requests to the system service may be handled by the extended service and not by the original one.
5. When the user switches back to the original user/space the process may be reversed, allowing for the manager to bind back to the original service.

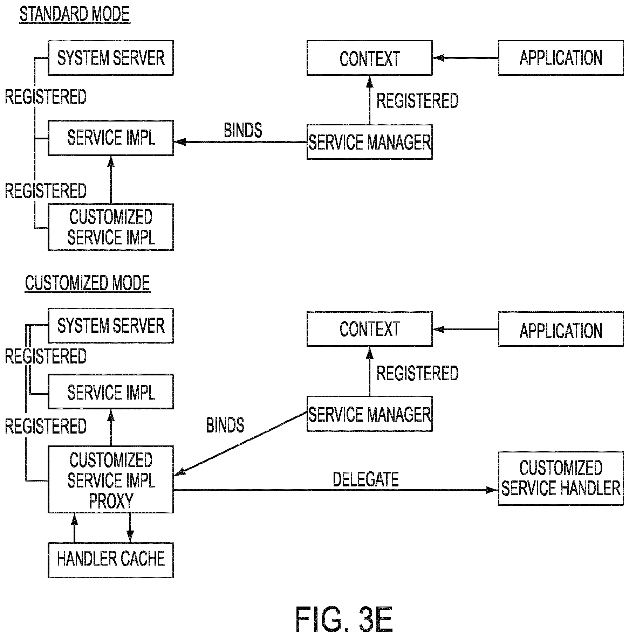

The above operations need not be performed in the order they are listed above. Some operations may be omitted, or additional operations may be performed. With this approach, the functionality offered by the service can be altered for the specific persona.
A mechanism to install these services may also be provided. The extended system service may be modified to be a proxy. A handler may be created that may provide the implementation for the service. A handler cache per virtual space may be created. The handlers may register themselves at the time of virtual space creation. The extended system proxy may delegate all functionality to the handlers. The extended service proxy may get an instance of the handler from the handler cache. In order to handle error conditions, a default implementation of the handlers may be registered in the handler cache for some or all persona. FIG. 3E shows a standard persona (Standard Mode), and a customized persona (Customized Mode). There may also be a "Secure Mode" in which data is copied to a secure persona.

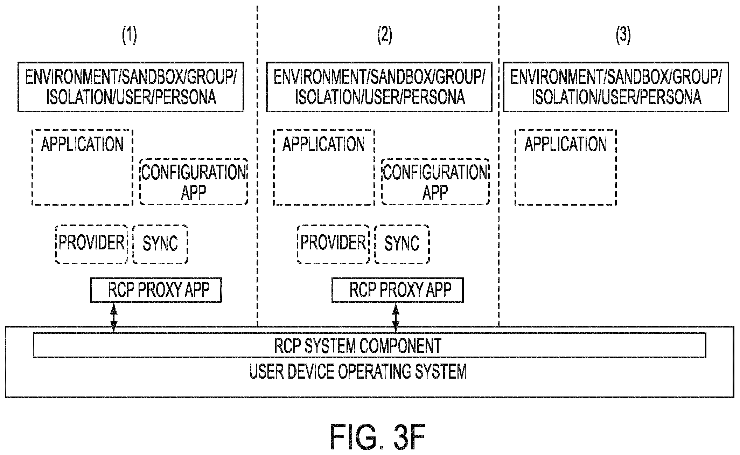

FIG. 3F shows information sharing across separate environment/ sandbox/ groups/ isolation/ user/ persona in same user device.

As shown in FIG. 3F below, the mechanism can be applied to any isolated environment, sandbox, virtual environments, groups, user etc. FIG. 3F shows an example of the overall design and component according to various embodiments of the present invention. FIG. 3F shows three isolated environments, out of which two are enabled for secure exchange of information.

An "Remote Content Providers ("RCP")" system component can be a part of user device operating system or can be installed later as one or more operating system modules such as, for example, a device driver. RCP system component may check on installation for any existing RCP proxy application that may already be installed in any of the isolated environment. The RCP proxy application may be verified via a trusted authentication mechanism such as, for example, digital certificate, secured key, access permission, hardware access restriction, etc. Isolated environment without RCP proxy application may not take part in exchange of information. RCP system component may start a background process in each RCP proxy application which in turns may bind to RCP system component.

For example, for an operating system that does not allow more than one isolated environment running at any given time during shutdown of the environment, all the information can be stored with RCP System component. RCP system component may make the information available to other isolated environments when they are brought up by user.

For each of the entity (Applications, preference/settings, database, functionalities (clipboard, notifications, message, alerts, updates, etc.)) that may need to take part in information exchange, at least one of two types of application (or any operating system provided mechanism) may exist that need to be installed, based on whether that entity wants to behave as source or destination for information or both.

For entity which wants to behave as both source and destination for information, both types of component may be installed (provider and sync, as shown in FIG. 3F). For supporting new entity, provider and sync (based on behaviour) component may need to be installed for that entity in each isolated environment. RCP proxy application may listen for installation or addition of any component within the isolated environment it exists in and may verify provider or sync via a trusted authentication mechanism such as, for example, digital certificate, secured key, access permission, hardware access restriction, etc. RCP proxy application can use any identification mechanism to identify whether the component is provider or sync. One of the ways to identify, for example, is to identify based on metadata in application information. RCP proxy application may maintain information about what all providers and sync are available on the isolated environment where it resides.

Another type of application or component may be provided, that can register itself with RCP proxy application to enforce policy or configuration regarding what information can get out of isolated environment and what information can flow in. Such application may be referred to as the configuration application, as shown in FIG. 3F. The configuration application can reside on a server or another device that may allow controlling the information flow in isolated environment remotely. Before registering configuration, application/component RCP proxy may verify the configuration via a trusted authentication mechanism such as, for example, digital certificate, secured key, access permission, hardware access restriction, etc.

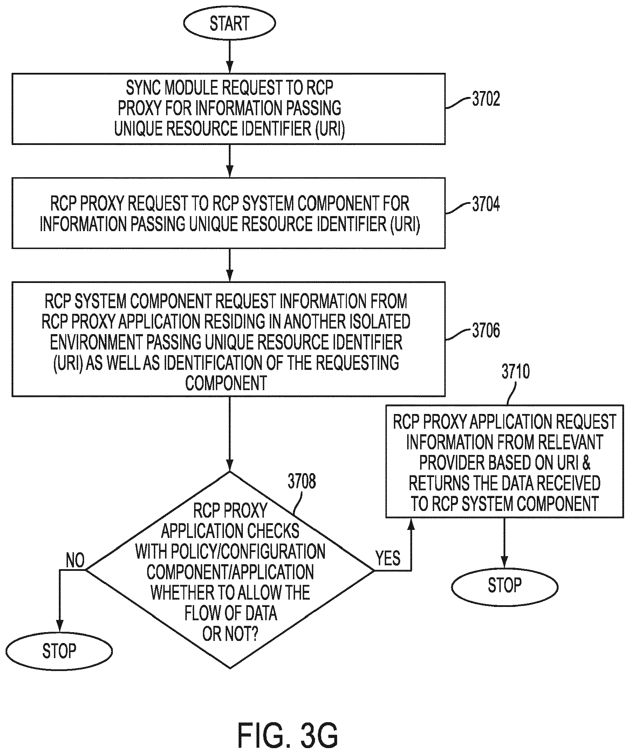

FIG. 3G below shows an example information flow across isolated environments between a sync and provider for a particular entity. When the sync module, for example, needs information from another environment, at block 3702, the sync module may query to an RCP proxy application residing in the same environment, passing a resource identifier. At block 3704, RCP proxy application may request information from the RCP system component, passing the unique resource identifier. At block 3706, the RCP system component, for example, which may be aware of an RCP proxy application residing in another environment, may request the information from the RCP proxy application residing in the other environment, passing the unique resource identifier and caller identification. At block 3708, the RCP proxy application in the other environment may check with a configuration application/component for permission to allow the information flow between the source and destination. Based on the response from configuration application information may be passed back or the request may be rejected. For example, if the response from the configuration application indicates that the request may be accepted, at block 3710, the RCP proxy application residing in the other environment may request information from relevant provider, based on the unique resource identifier, and return the received data to the RCP system component.

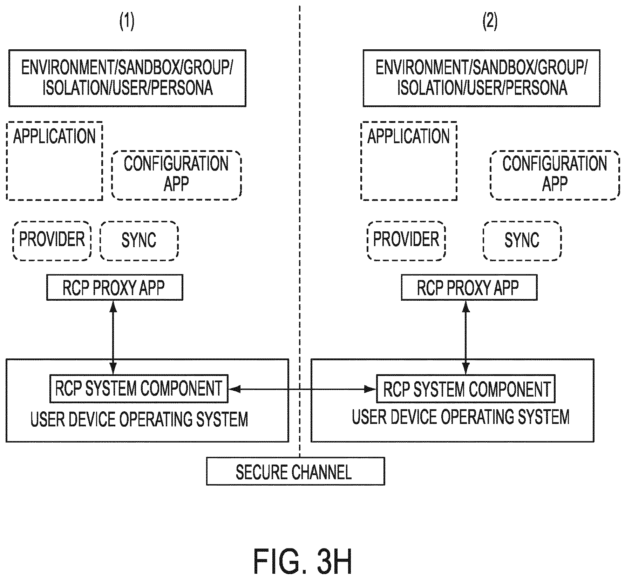

FIG. 3H shows the interaction of a same component when the environments reside on different user devices. This architecture may require a secure communication channel to accomplish the functionality. This channel can be developed on top of any communication protocol or technology.

The persona framework may be implemented in various computing platforms/environments such as, for example, mobile devices compatible with the Android platform. Using personas provides the user(s) the possibility to create multiple virtual environments (or sub-environments) where the user is able to play different characters / roles (or acts in different personality) to manage his/her needs while fully utilizing mobile devices in larger spectrum.

For example, a user (for the purpose of explanation only, called Alice) can create two personas, one may be called a "work" persona, the other a "play" persona. In addition to, or alternatively, one or more other personas may be created, if desired by Alice. Now, Alice, as a user, may be able to use the "work persona", acting as an employee (worker character), to manage all her job-related tasks, such as, for example, managing corporate emails, business contacts, meeting schedules on calendar and working presentation documents. If she desires, Alice also may have an option to switch to the "play persona," taking on the character as Alice in her personal life, such as, for example, to organize all her activities, such as friend contacts, family photos, social network, entertainment events, etc.

Alice's "work persona" and "play persona" may be two separate/isolated sub-environments running under the same user Alice. The "work persona" could connect to corporation servers (such as, for example, Email, SharePoint, etc.), while "play persona" might connect to the servers for Alice's personal usage, such as, for example, Gmail, Facebook, Netflix, Dropbox, etc. Thus, each individual persona may have its own installed mobile applications (or install), network servers to connect to, or the local storage space on devices and/or through clouding storages.

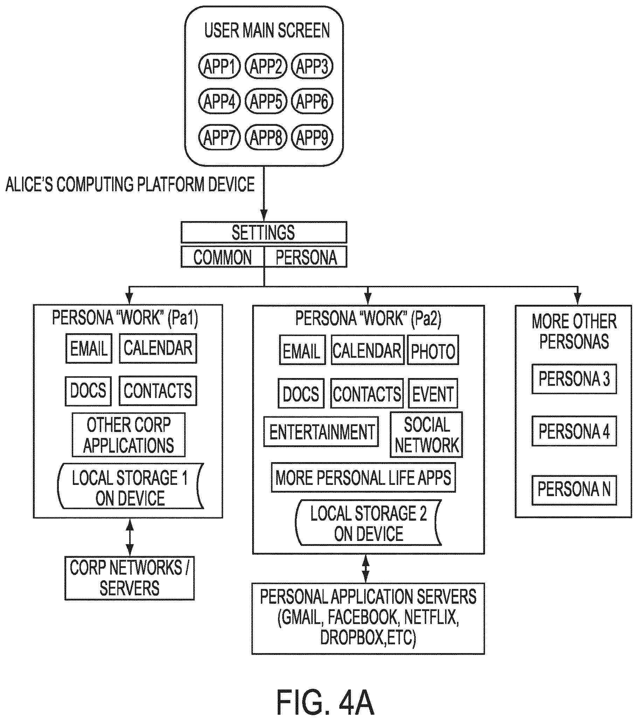

The FIG. 4A shows a conceptual diagram of a persona framework.

The persona may be an independent sub-environment within the user's environment. All "plain" (original or vanilla) personas originally created by the user may be exactly the same. For example, they all may have the same characteristics and may be managed by the user (creator / owner) individually. The persona may be an autonomous environment within the user's environment. However, if allowed, it is quite possible to customize personas (e.g., to alter or limit persona's behaviours) by applying different rules to fit into different environments' requirements. For example, enterprise- or work-use personas may need more secure policies, while personal personas may be more open for sharing.

In the persona Framework, a persona(s), as a character of a user, may be part of the user's personality or behaviour(s) which belongs to the user (Alice, for example). All of Alice's personas may be running under Alice's environment (e.g., under the same user's environment). Therefore, the persona(s) is/are able to share some properties of the user's environment if allowed. It is possible to for the user (or programs) to make different types of personas using various policies or adding secure wrappers. In an embodiment, multiple personas may share certain data from their common applications if such feature(s) is/are desired.

Table 1 shows example features of the persona framework.

**Table 1**

| Features | Persona Framework |
|---|---|
| Creation | The User creates persona(s) |
| Relationship (ownership & sharing environment) | The User (creator) owns all personas he/she created. |
| | The persona is an independent virtual sub-environment under the particular user, so the persona, in nature, is allowed to share some features from the user's environment, such as, the login session and Password (user's PIN); personas could be classified / customized by applying certain policies to make different personas, that is, more secure ones and/or fancy ones beyond the original version / plain persona; also, the user could make personas to share some applications' data if allowed. All user's personas co-exist at the same user environment, as long as this user is login, his/her personas share the user's login session, thus no need to switch different user in order to access to this user's persona(s). |
| Administration | The user/owner is the administrator for all personas and user itself. |
| Playing on Multiple Characters/personalities on the same user | Yes. Unique characteristics |
| Manage Secure Enterprise | It is possible to implement. |

The persona Framework discussed above, called "pure/plain persona", may be the foundation for all of other persona-based frameworks, such as a secure persona, which may be built upon a secured container wrapped around the pure/plain persona with various different secure policies and/or configurations, etc. The secure persona may also be referred to as a "fancy persona."

The following sections will describe example features of the plain persona in detail.

The persona is a sub-environment that may be created by the user at the User Level (for example, user login environment). The user may be the creator for some or all of its (his/her) personas and the owner of personas. All personas may share the user login session and other common resources and environments in the user space. However, each persona may own a unique virtual space within the user's environment. The persona may be an independent, isolated and safe environment where the user can autonomously govern, for example, his/her applications and settings based on his/her particular character's needs.

In embodiment, some or all of applications running within one persona (e.g., at persona Level) may completely be separated from the ones on another persona. Application is not shared among personas; neither is application data. For example, each persona may have its own local storage or network storage (or cloud space). This characteristics may bring flexibility for the user to manage the persona(s), for example, the user can remove an old persona without deleting shared data; the user can create as much personas as he/she needs or likes (within system limits); also, within the persona, the user can install applications which could be the same one or different ones from other personas. Some or all of plain personas created by the user originally may have the same property. The user may be able to customize the plain personas, using more or less features, for example, for different purposes. Among personas, there is no operational interruption among personas.

The user may be the creator and owner of the persona(s). Thus, the persona(s) running inside of the user login session may share some features of the user.

On a computing platform (e.g., Android platform), the entire user environment may act as a "big container" which may contain common features, such as, for example, network, Wi-Fi, Bluetooth, location services, software update (OS) and other features under, for example, the user "Settings" menu. According to various embodiments of the present invention, the persona(s) may share some or all of these common device resources with the User. This may make it more convenient for the user (e.g., Bob/Alice) to change these common device/framework settings at the persona level; he/she may not need to switch back to the User Level to do so. How much resources or settings from the user level environment may be shared could be determined by an administrator or other governance processes.

According to various embodiments of the present invention, a login token (e.g., personal identification number ("PIN"), password, etc.) may be required for the user to enter into a particular persona, for example, on a lock screen (e.g., lock screen of an Android-running mobile device), either from the User Level or from a different persona. All personas may share the user's login token; because the same user (or actual person, or human being) owns all of these personas and does actually login and switch into different persona(s). In an embodiment, each persona may have its own login token.

In an embodiment, the speed to switch persona is at around one-fifth ("1/5") the time of switching between two users, in part, for example, because the persona(s) shares the user login session, by which there may be much less, for example, "save status" operations during switching personas within the user than switching between two users.

The user may be the creator of personas and the administrator. For example, the persona may be created at the user environment and managed at the user level. In an embodiment, there may be four operations that the end-user can do, examples of which is described as the followings:
- Create persona: the user can create a brand new persona by adding persona with a unique name. The icon/image may be assigned automatically.
- Review all persona: all existing personas may be displayed on screen for review and/or update.
- Update persona Info: the user can replace an existing persona's name with new name, and/or change its icon (image) as well.
- Remove persona: the user can delete an existing persona from the persona list.

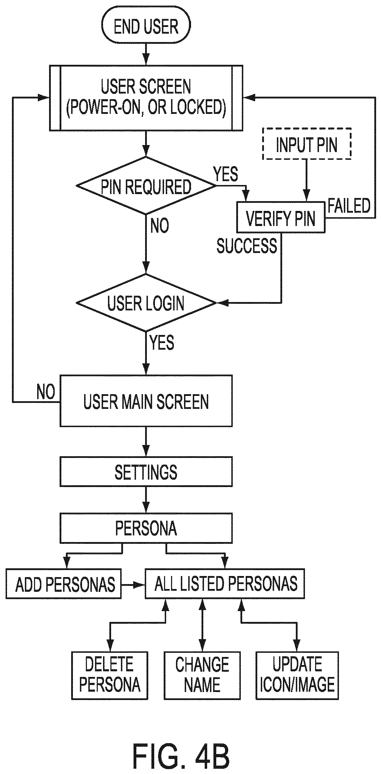

The FIG. 4B shows an example flowchart for persona's creation, removal and update.

If the user is currently at the persona Level, then, the only action is available may be to change the persona's name and/or its icon/image, because the persona may not be able to remove itself, and/or re-create itself.

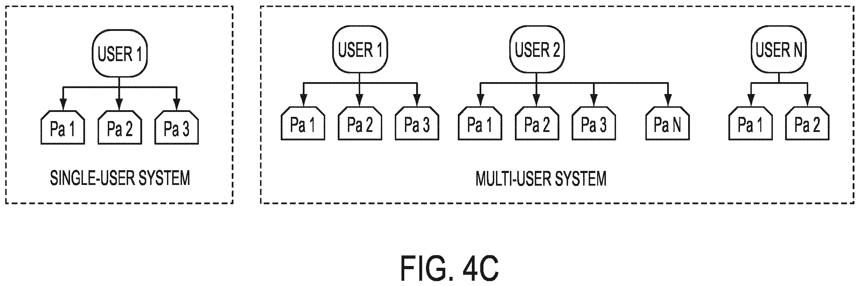

In an embodiment, there may not be multi-hierarchical structure applied for the persona framework, and, the persona may not be able to create another persona or sub-persona(s). FIG. 4C shows an example persona framework having a two-layer relationship. In other embodiments, multi-hierarchical structure may also be possible.

There may be different ways for the user to access to the persona, including the "Internally Access" to persona (within the user space), "Directly Access" to persona from, for example, a "User Login Screen", and "Indirectly Access" to persona from, for example, a "User Login Screen", which is briefly described in the followings as examples:
- Internally Access to persona (within the user space): if the user is at the "User Main Menu", then he/she is able to directly enter to the particular persona through "Switch on Sub-Menu".
- Directly Access to persona from "User Login Screen": if the user is on the login screen, then he/she can select a particular persona (from the existing persona list under this user) to directly enter into this "persona Screen (main theme)"; however, the user PIN will be required to unlock the screen if the secure password has been setup in order get into the persona.
- Indirectly Access to persona from "User Login Screen": if the user is on the login screen, he/she has a choice to select "the User" to get into the User Space first, then switch into a particular persona; the second step is the same as "Internally Access to persona".

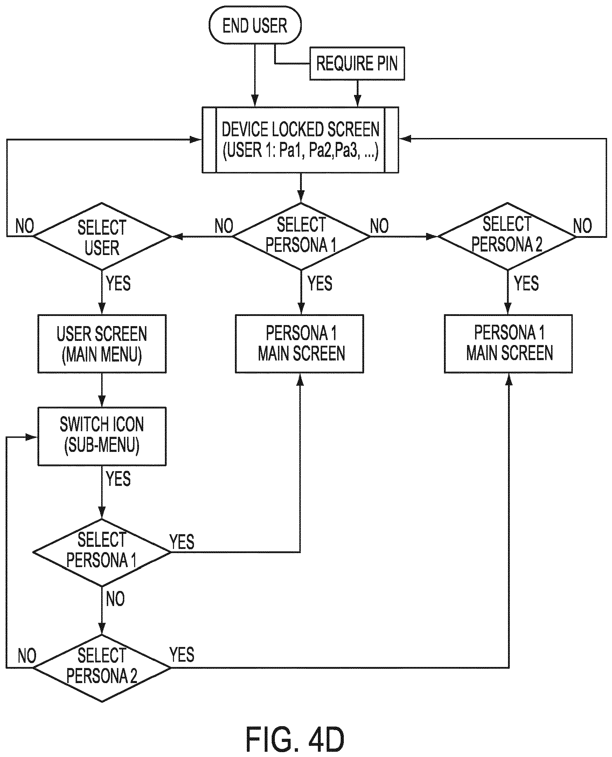

The FIG. 4D shows example use cases for the user to access to personas.

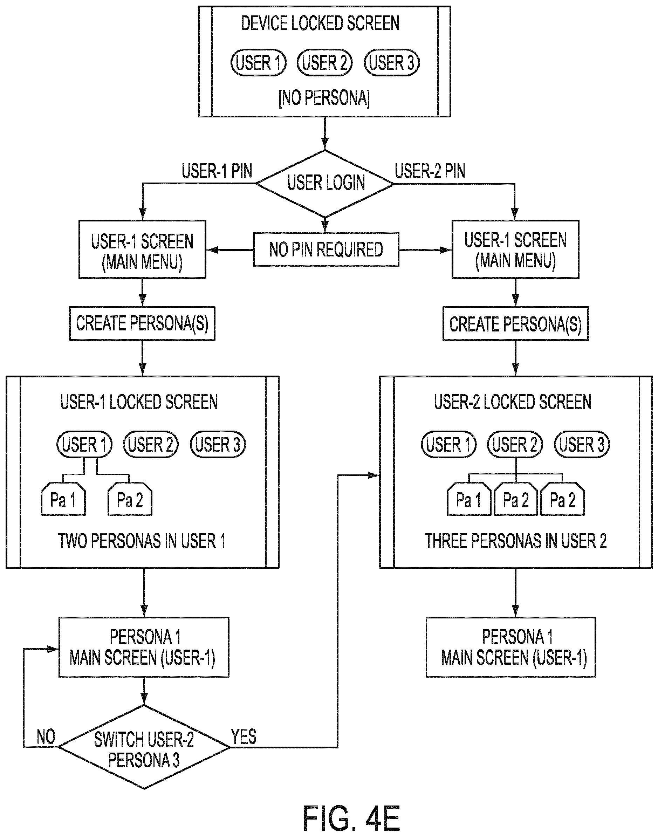

Mobile devices may run on a single-user system, and some tablets may run on multi-user system. FIG. 4E shows an example flowchart of switching from one user's persona into another user's persona on a multi-user system.

The persona may be a user-tight environment or the property of the user such that access to a user-specified persona may need to go through the particular user first. FIG. 4E presents an example scenario, where switching between different personas among multiple users must go through these users first.

Example operations that a user (or a program can do at the persona level is described below.
- The user is able to change persona's name and/or update icon/image for the selected persona.
- The user is able to exit from one persona, and then go back to User Level (at user space).
- The user is able to switch from one persona (Pal) into another persona (Pa2) under the same user (Alice); or from one persona (Pal) under this user (Alice) into another persona (Pal) under anther user (Bob) in the multi-user system.
- The user is able to manage all mobile applications within the persona(s) described in FIG. 4A independently and freely, such as, add apps, remove apps, backup data at personal Dropbox (or Corp server separately), and etc.
- There are lots of add-on programming that can be built on the top of this plain/vanilla persona Framework, for example, the KNOX persona, which is represented in a separate document.

According to various embodiments of the present invention, the persona Framework may be an independent/isolated virtual sub-environment within the same user space that allows the user to act as different characters. The persona(s) may be autonomously managed by the user but they may also share the user's login session, login token and other resource on the mobile device. The end user can easily control / manipulate these personas, for example, add new one, remove old one, rename, change icon/image, and switch different personas within a user or between two users. The plain persona Framework can be customized to build many different fancy features that end-users need.

According to various embodiments of the present invention, a container may be a secured persona, in which a set of designed rules or secured policies restricted on the persona may protect outsiders from accessing apps or data inside Container.

The secure persona is one of various types of secured personas or Container. For example, the secure persona may be called a secure Container.

The secure Container is a type of containers. Some or all secure rules used may be related to enterprise IT security polices in order to guard the business data and enterprise servers / network. For example, secure container, or enterprise container, may be a secured persona (or Container) with a rich set of security polices defined and enforced by MDM (mobile device management) or MCM (mobile content management) from enterprise IT Management. Such polices, for example, the user authentication, data security, VNP, email, application blacklisting or whitelisting and others, may be executed by a secure container running on mobile devices.

The secure Container may provide the safety and security for both enterprise end-users to use electronic devices and enterprise IT to manage electronic devices and guard business data.

A secure container and at least one (or more) personal persona(s) may co-exist at the user space. This configuration may allow the end-user to enjoy dual (or triple / multi) personas for both his/her work and life (for example, 'personal life' persona and 'work' persona known as secure container) anywhere (at work, home and on road) without compromising IT securities and user's privacy.

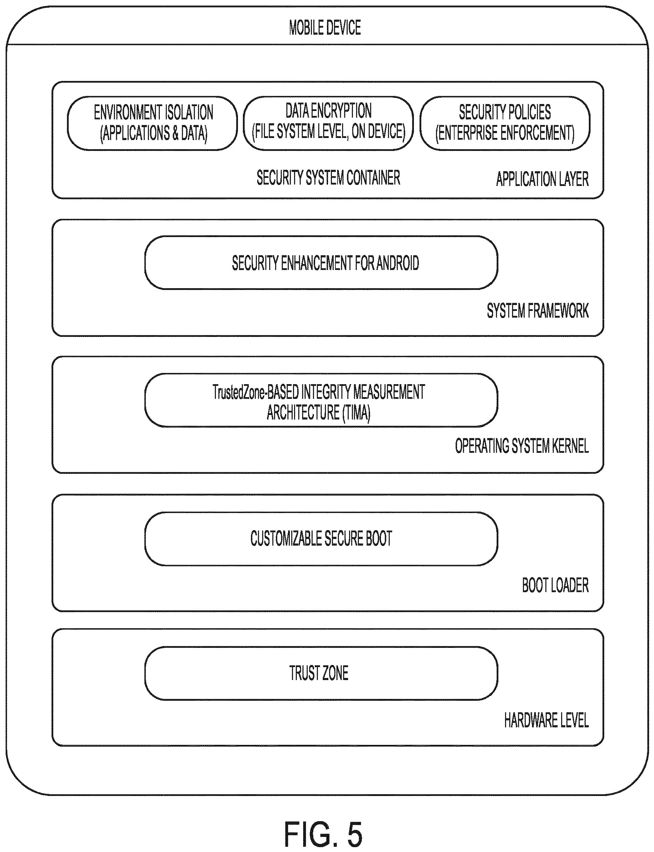

In an embodiment, the persona's RCP service may allow data-sharing between personas with privacy mode and/or read-only mode. The end-user may be able to keep certain privacy under IT security scrutiny. A set of security policies may be injected into and integrated with a secure Container, so it may be possible for enterprise IT management to secure business data (e.g., no or insubstantial data leakage), manage electronic devices, and control user's applications or data even if running on BYOD (bring your own device). According to various embodiments of the present invention, in addition to or alternative to secure container located at Application Layer, there may be a suite of security measurement that may be designed and implemented to guarantee the security for secure container underneath. FIG. 5 shows an example multiple-layered security for a secure container.

FIG. 5 shows five example layers of a mobile device. From the top to down, they are Application Layer, system framework, operating system kernel, Boot Loader, and Hardware Level. The secure Container may reside at the Application Layer and provide, for example, three security measures, including the Environment Isolation for applications and data (and/or data-sharing), Data Encryption at file system level on device, and Enterprise-enforced Security Policies from IT management. Security enhancement measures such as, for example, Security Enhancement for Android (SE for Android) at Android Framework Layer may be provided. Additional security measures such as, for example, Trusted Zone-based Integrity Measurement Architecture (TIMA) may be provided, for example, at the OS kernel level. Yet further security measures may be provided, for example, the Customizable Secure Boot, at the Boot Loader level. Other security measures such as, for example, the Trust Zone may also be implemented, for example, within the Hardware level.

According to various aspects of the present invention, the secure container management may be completely separated from the Android mobile device management, including, for example, the secure data (the persona/Container data encryption vs. an entire Android device encryption), the required password (KNOX password vs. the user login PIN on locked screen), the policy enforcement (KNOX secured policies vs. personal mobile device policies), and other more. Various ways to manage secure container security is possible.

According to various embodiments of the present invention, there may be various (a set of) policies to be applied to and enforced on the secure container to achieve the enterprise data security and mobile device manageability by enterprise IT. These IT management policies may be setup and configured through the MDM and/or MCM, and then pushed into the secure container. The secure container may read these runnable scripts and implement and execute these polices to satisfy IT security measurement. For example, the secure container may be completely controlled or managed by enterprise IT management. Examples described below, illustrate example security manageability.

For example, the user may be required to input a password in order to enter a KNOX Container. This may be a particular password for a secure container and it not the same as the user's PIN which may be for unlocking a user screen (or entry of user's account) on a mobile device. The secure container password can be set by the end-user or enterprise IT management Administrator. Also, there may be certain requirements to satisfy the complexity of the password, such as, for example, at least 8-32 characters, including capital / lower case, digital, and symbol, etc. The foregoing may be additional security policy to be enforced.

There may also be a policy for inactivity time, or the "time-out" for password re-enter, for example, if this silent period of time (such as, the user is away from secure container for a period of time, or keeps doing nothing for a period of time on the mobile device) has passed, the user may be required to re-enter his/her KNOX Container password to access to KNOX Container and/or its contents, such as, for example, particular apps (for example, Calendar or Contacts or others). The default silent/inactivity time can be determined by IT management, for example, 10 minutes; or IT policy could relax to give the user an option to reset this period time, such as, for example, 5 minutes or 15 minutes, etc.

Based on a variety of policies enforced, some or all of applications inside a secure container can be installed, configured and controlled by MDM and/or MCM.

Some or all of data inside a secure container, or the entire secure container, may be encrypted at file system level using, for example, advanced algorithms (e.g., AES 256 or others). Some or all of secure container's data may be useful (to be read out or edited) within the secure container Space. In an embodiment, the data may get out of the secure container, and these exposed data may still be securely guarded unless decrypted appropriately. Other policies setup to prevent the data inside secure container from flowing out may also be provided.

This type of files or file system level encryption, which may be called "secure persona data encryption," may apply to the secure container (like a "virtual device") and can be enforced by Enterprise IT Management, and may not have an impact on personal persona(s), so the end-user still can enjoy his/her personal persona's "freedom" and convenience.

Cleaning up the Container's data (e.g., when the mobile device is lost) can be done through MDM and/or MCM. The administrators of Enterprise IT may be able to remotely wipe out all of data residing inside the secure container and/or delete the entire secure container if desired; In an embodiment, the foregoing operations may be performed while keeping the user's personal persona's data untouched.

According to various embodiments of the present invention, there may be, for example, a small yellow icon of a triangle with an explanation mark to be attached on each secure application (applications that are associated with the secure container). Therefore, if the user sees yellow icons on the top of apps, he/she may know that he/she is in the secure Container.

The persona-Based Framework may provide end-users with, for example, an RCP (Remote Content Provider) service. For example, secure container may come with the RCP service containing a set of default applications (default settings) including, for example, Calendar, Contacts, Clipboard, Web Browser Bookmarks, Notifications, and others, listed below. The capability of these applications within the example pre-configured RCP service will be described in details later within this document. The end-user may have the ability to turn off these RCP services, and/or turn them back on again as desired.
- secure Calendar
- secure Contacts
- secure Clipboard
- secure Bookmarks
- secure Notifications

Example rules or policies for data-sharing, here, are:
The personal persona's application(s) data can be imported into the secure container's by using different data-sharing modes (privacy or open) and data models (multiple databases or one big common shared database, but transparent to users), in which the imported data could be the "title-display-only (no detailed info), or "read-only", or "completed-detailed-display (full details, as is)".

It may not be allowed to copy any app(s) and its data from the inside of secure container and put such data into the outside of secure container (for example, into any other types of persona), because all these enterprise data is securely guarded by secure container's policies from IT management.

Example rules may be applied to secure applications described in the followings.

Secure Calendar: it allows the end-user to import (or copy) his/her personal persona's Calendar's data into the inside of secure container, however, all of these personal events (or user's schedules) can only be displayed in "time-slot-displayed" mode with no detailed information, which is in Privacy Mode. It may not allow the user to copy any of Calendar data from the inside of secure container out and put it into the personal persona space.

Secure contacts: it allows the end-user to import (or copy) all of his/her personal persona's Contacts (with full detailed information) into the inside of secure Container in full-displayed manner, but it is in the "read-only" mode which is not editable, that is, the user only can view/read these full personal contacts or lists from his/her secure container, but is not able to make any changes or add/remove actions. At meantime, it does not allow the user to copy any of Contacts data inside secure container out and into the personal persona Space.

Secure Clipboard: it allows the end-user to copy his/her current Clipboard content from the personal persona Space into the secure container and display them fully. However, it does not allow the user to copy any of Clipboard content inside secure container out into the personal persona Space.

Secure Bookmarks: it allows the end-user to copy all of his/her bookmarks of Web Browsers from the personal persona Space into the Secure container and display them fully, with full-detailed information (as is). However, it does not allow the user to copy any of bookmarks inside Secure container out and into the personal persona Space.

Secure Notifications: it allows all of user's personal apps' notifications to be imported and displayed fully inside Secure container, however, the notifications from apps inside Secure container may be "sanitized", which means there is only one simple short message indicating "there is a notification from your Secure System". Furthermore, if the user reviewed and then dismissed the particular notification from anywhere, either inside secure container or outside secure container (that is, in personal persona(s) or User Space), the deleted notification will be permanently removed from the mobile device ever.

According to various embodiments of the present invention, the developed apps can be directly imported into the personal or secure containers and be managed safely and securely. Therefore, no alternations to the applications are required.

According to various embodiments of the present invention, a Remote Content Provider (RCP) Service Framework is provided. The RCP Service Framework may be built upon the Plain/Pure persona Framework in which, for example, the persona is designed as an isolated, independent and autonomy sub-environment. The RCP Service provides the capacity of flexibility and scalability which allows a user(s) to share persona's private data among multiple personas and/or share the data between the persona and its owner/user at User Level, if necessary. Using RCP Service, the shared data can be as either "private" or "public", depended on the user's needs or preference.

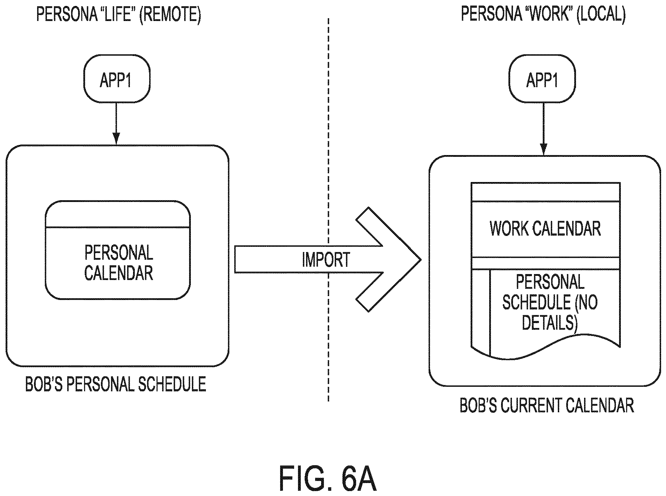

For example, the user (referred to as "Bob" for the purpose of convenience only) wants to import his "personal schedule" running on his 'life persona' into his current "work calendar" on his 'work persona', by which Bob is able to have a full view of his Calendar including all of personal appointments when he is at his 'work persona' space where he is acting as an employee character (that is, the different personality as he is the life). However, Bob still likes to have certain privacy regarding his personal calendar data, thus he actually chooses to import these data in "privacy mode", in this way, all of Bob's personal appointments is only presented as "time-slots-occupied" (such as, 9:00-10:00am, 08/29/2013), but there is no other detailed info (such as, doctor's name, location, etc.) to be displayed or viewed. The FIG. 6A shows this example scenario.

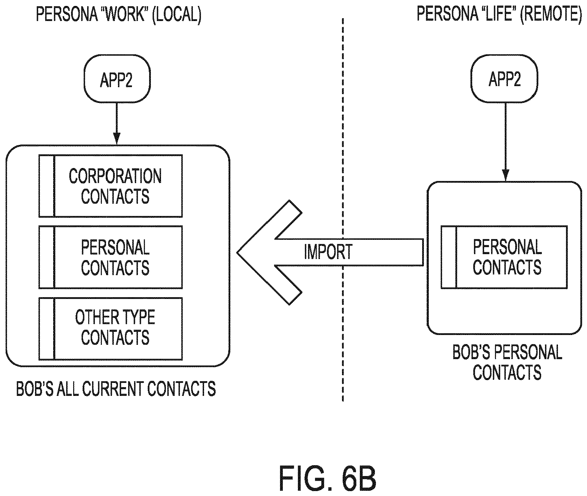

In the meantime, Bob also likes to import his "personal contacts" from 'life persona' into "corporation contacts" on 'work persona' (or via versa if he needs) and to integrate all of these contacts together and form a completed contact list. In this case, Bob actually decides to make his "personal contacts" data to be open / public for his 'work persona', thus, he not only has a full list of contacts (Corporation Contacts plus personal Contacts) in bird-eye view, but also is able to peek the detail of each item from "personal contact" running on 'work persona' space, such as the name, phone number, email and etc. That is, the imported "personal contacts" inside of 'work persona' will be the exactly same as the one actually on 'life persona', because Bob uses "open/public mode", which is showed in FIG. 6B.

The examples presented above show that the RCP Service gives the user(s) the flexibility of how to manage the imported data, using, for example, "privacy mode" or "open/public mode." The user, for example, has a complete control over how to share persona's data, such as, "what application to select", "privacy rules to apply", "how many applications allowed for RCP Service", and "stop or resume RCP data sharing", and other more possibly. The RCP Service Framework, may provide the complete transparency for end-users to utilize those remote data sharing service. The user may be able easily to select and complete actions/operations, including "select applications/ personas/users", "manipulate shared data" and "manage module/agent" in the way that the user prefers through, for example, the UX/GUI (graphic user interface) running on Android mobile devices.

Table 2 shows an example comparison of Privacy Mode and Open Mode for Data Sharing Within RCP Service Framework.

**Table 2**

| | Privacy Mode | Open Mode |
|---|---|---|
| Import Data | Select the source data remotely input into the destination persona, using "privacy". | Select the source data remotely input into the destination persona, using "open or public". |
| Data Review | The imported data is stripped in order to fulfil keeping the user's privacy, thus the user only can view the "title" but no detailed info to be exposed or displayed at the destination persona. | All imported data details are exposed to the user at the destination persona. |
| Secured Sandbox | The imported data is more secured and restricted in "sandbox" at the destination persona. | The imported data is more flexible in "sandbox" at the destination persona. |
| Preference or Recommendation | Depended on user's needs or preference, also based on the nature of applications and import direction. | Depended on user's needs or preference, also based on the nature of applications and import direction. |
| | For example, "Calendar", is recommended to use "Privacy" mode if from 'life' persona into 'work' persona. | For example, "Contacts", might be recommended as "Open" from 'life' persona into 'work' persona. So does "Notifications". |

In addition to or alternative to Calendar and Contacts, there may be other applications running on mobile devices, such as, for example, Clipboard, Notifications, SMS, and Call Log, which may also support for data-sharing among personas. Below is an example, non-exhaustive list of applications that may be implemented to support the RCP Service Framework.
- Contacts
- Calendar
- Clipboard
- Notifications
- Browser Bookmarks
- SMS
- Call Log

The RCP Service Framework may be implemented with scalability that allows developers to add new applications into RCP Service Framework. The RCP Service may be associated with an API that allows developers (including application developers or third-party developers) to develop the module(s) to make their selected applications available for RCP Service.

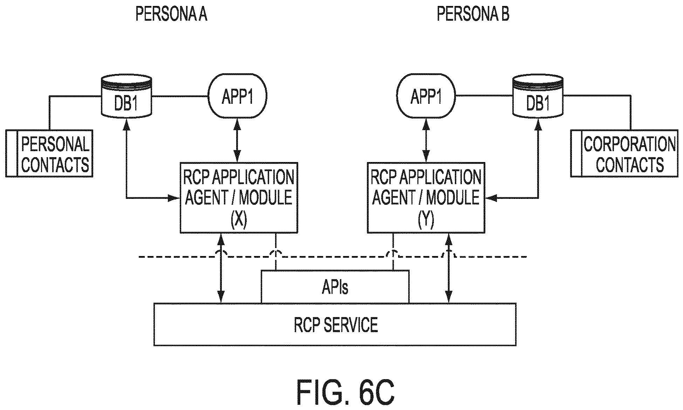

The diagram in FIG. 6C illustrates an example structure of RCP Service Framework. Example features of RCP Service Framework will be described below, including RCP APIs, RCP Application agent, data sharing model, and user / persona operations.

FIG. 6C, shows two personas, A and B. In this example, each persona has one application (App1), and each application has its own application database (DB1). On each persona, there is an "RCP Application Agent (or module)", that is, an agent X on persona A, and Y on persona B. The RCP Service Components residing inside of a computing platform framework (persona-based), provide the functional APIs that are used by developers to create new RCP-App-Agent(s) (X and Y) for each mobile application running on each persona (of mobile device). These agents, X and Y, may be identical application software module with same functions respectively/individually, which includes both content provider and content synchronizer. The content provider shall read out or deal with the remote data from the source persona (remote one). The content synchronizer shall synchronize the received data on the destination persona (or local one) and render UX pages (if necessary depending the design and implementation). So, each persona if having an RCP-App-Agent installed or attached shall have the capability to run RCP Service and to make the particular application available for the user(s) to share data among personas. Such persona's is able to act as either "remote source" or "local destination" at one time, but the RCP-App-Agent active on the persona can be configured as available for both "remote/source" and "local/destination". The user shall have choices to make it happened.

The "RCP-App-Agent" may be built on the top of RCP Service. The RCP Service may include several RCP Service components which may be developed and located within the persona-based framework. The RCP Service Components may provide the mechanisms how these RCP-App-Agent(s) (X and Y) to be registered, verified, securely-certified, installed, or removed and other related items; and make sure these activities completed properly.

With development APIs, application developers may be able to create a new "RCP-App-Agent" for applications running on the persona.

If an RCP-App-Agent is installed for a persona on a mobile device, the end-user may be able to enjoy remote sharing data from RCP Service.

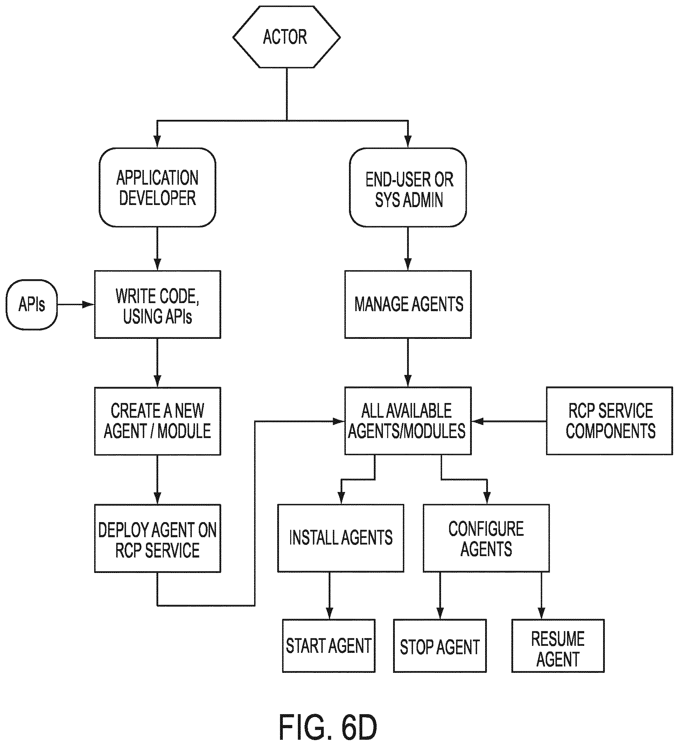

FIG. 6D shows example use cases. There may be two types of actors, one is application developer(s) as discussed before; the other is end-users, who could be the device owner or just users if it is on the multi-user system, or who could be an administrator (who might manage enterprise mobile device remotely). Below is listed for some example use cases for the RCP Service Framework.
- Write code / develop a new RCP-App-Agent (X, Y, and more) by developers
- Install RCP-App-Agent(s) by end-users
- Configure RCP-App-Agent(s) by end-users

Write code: the application developer(s) is/are able to use APIs, writing code to create a new "RCP-App-Agent" (or module) for any application running on the persona(s) (or any isolated persona-like environment, which could be called as environment/sandbox/group/isolation/user/persona, for example).

Install RCP-App-Agent(s): these software modules can be installed on mobile devices by end-users (either device owner, or persona owner, or system administrator if it is truly remote control) for RCP Service utilization.

Configure RCP-App-Agent(s): the end-user is able to make configuration for these software modules to control agent behaviour, such as "Stop Running", "Resume or Restart", and other possible scenarios.

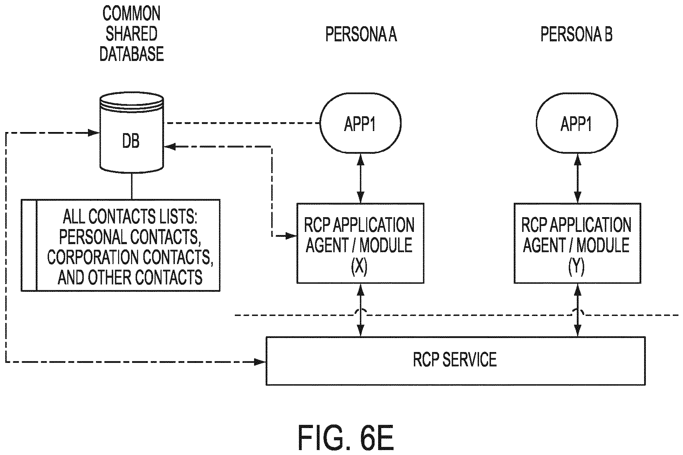

There may be two different data-sharing models available for RCP Service Framework, which is illustrated in the FIG. 6C from previous section and FIG. 6E in the following.

The FIG. 6C presents the Data-sharing Model-1. In this model, each application on each persona has its own dedicated data repository / local storage / database, for example, Agent X running on persona A ('life'), which controls Appl (Contacts), has DB1 to store user Bob's personal Contacts info; similarly, Agent Y on persona B ('work'), which controls Appl (Contacts), has DB1 to store Bob's corporation contacts info. If Bob wants to share his 'personal contacts' located at DB1 on persona A ('life') from his 'work' (persona B), that is, Bob imports "personal Contact" on A into "Corporation Contact" on B (similarly in FIG.-2), then all personal contact data needs to be "physically" remotely copied from the DB1-on-A into the DB1-on-B through RCP Service in order to be available for being displayed on user's GUI or viewed by user.

FIG. 6E shows a different example data-sharing model. In Model-2, there is one Common Shared Database (DB) for one particular application running on Android Mobile Device. Since the content most likely resides at the remote database (except for one which is attached to DB), so most personas fetch the shared data from the remote DB through RCP-App-Agent to consume the RCP service. In this case, Appl (Contacts, in our example here) truly shares all the data remotely from the common-shared DB. If Bob wants to view his personal contacts from persona B (which is 'work'), he takes the same action, to import on his personal contacts on persona A (which is 'life') into his contact list on persona B ('work'); however, the "personal contact data" is not moved/copied into persona B (since there is no DB1 on persona B in Model-2) but just directly fetched from the common shared DB through RCP Service, and then the RCP-App-Agent will push these queried data into persona B and later render/display the update on user's UX/GUI. Similarly, if there is a case that Bob wants to view his corporation contacts from persona A ('life'), the "corporation contact data" will be fetched directly from the common-shared DB. This type of common-shared DB can be directly attached with one particular persona (such as A, in FIG. 6E), which makes this DB local for persona A; or this DB could be completely remote, independently residing at somewhere in user space. All of these remote data fetching may be completely transparent to end-users.

The Table 3 lists the comparison of data-sharing models. Table 3 provides some example recommendations for which Model is applied to applications.

**Table 3**

| | Data-Sharing Model-1 | Data-Sharing Model-2 |
|---|---|---|
| User Operations | The same actions to the user. The remote shared-data fetching is completely transparent to users. | The same actions to the user. The remote shared data fetching is completely transparent to users. |
| DB Number | Multiple application databases; one DB for each application running on each individual persona, that is, for example, it could be 3 DB1 for "Contacts" on three different personas. | Only one common shared database DB. All data from one application from different personas will be stored at this particular shared DB. |
| DB Location | Each application DB is local to each persona, and it is persona-attached DB. | The common shared application DB could be attached with one particular persona or completely detached with all personas, that is, located remotely at user space. |
| | | Also, it is possible, all applications' common shared database DBs could form one "entire App DB". This is just option if needed. |
| Maintenance | Multiple databases, there is multiple copies of application data (persona-related), or duplicated data, on mobile device. The lost data can be recovered from different DBs. | There is only one big database, no duplicate application data (persona-related) on mobile device. Easy to maintenance but might require backup of DBs. |
| Efficiency | It will be faster operated (read-write) over multiple small DBs, since small data transactions. | It could take longer time to fetch remote data if database is "huge" or very-large table/records to access. |
| Which Model to Choose | Depending on each application and other factors | |

Table 4. The Recommended Data-Sharing Model for Available Applications within RCP Service

**Table 4**

| Application | Data-Sharing Model-1 | Data-Sharing Model-2 |
|---|---|---|
| Calendar | Yes | Yes |
| Contacts | Yes | Yes |
| Clipboard | No | Yes |
| Notifications | Yes | No |
| Web Browser Bookmarks | No | Yes |
| SMS | No | Yes |
| Call Log | No | Yes |
| Other Apps | | |

According to various embodiments of the present invention, the RCP Service Framework may provide data-sharing service for end-users. The user is able to use RCP Service to share persona's private data of its available applications among personas and/or between the persona and its user space. There may be, for example, two modes which the user can select for data sharing, that is, in privacy mode and open/public mode.

There may be many suitable applications that can be fit into RCP Service. This list includes, for example, but not limited to, contacts, calendar, clipboard, notifications, browser bookmarks, SMS, call log and more. The end-user is able to manage RCP-App-Agent(s) running on the persona(s), including install Agent (module), stop Agent, and resume Agent. There may be, for example, two different "remote sharing data models". The model-1 with multiple App-DBs, each persona has its own DB for one particular application; while the model-2 only has one common shared DB for one application across all personas. There are different usages and purposes with advantages and disadvantages for each application to select the particular data sharing model. Other models may also be possible.

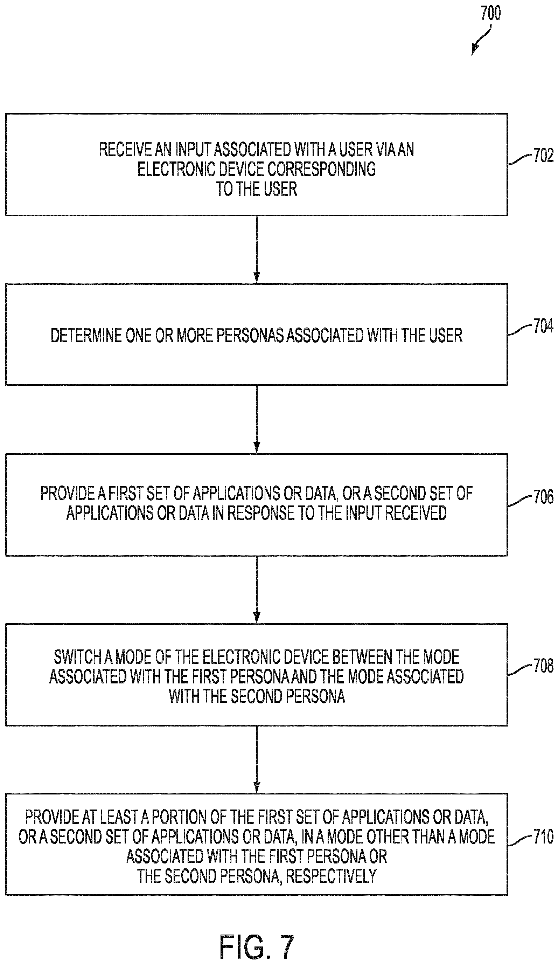

FIG. 7 shows a block diagram of a set of operations 700 according to various embodiments of the present invention. The set of operations may be performed, for example, by device 100. At block 702, an input associated with a user may be received via an electronic device corresponding to the user. The electronic device corresponding to the user may be, for example, device 100. The input associated with the user may be, for example, an input for selecting a user environment (e.g., a persona) in which the user wishes to use the electronic device.

At block 704, one or more personas associated with the user may be determined. The personas may include a first persona and a second persona. For example, the user may be associated with a persona representing a user environment for personal use, and another persona representing a user environment for work use. Applications or data associated with a persona may either be stored as encrypted or non-encrypted. Applications or data that are stored as encrypted may be stored based on a token associated with a user (e.g., private key, password, biometric information, etc.). For example, the applications or data may be encrypted using the token and stored. The applications or data that are stored as encrypted may be accessed based on the same, or another token (e.g., public key associated with the private key used for encryption or identical password or biometric information that are used for encryption, etc.).

At block 706, a first set of applications or data, or a second set of applications or data may be provided in response to the input received at block 702. The first set or the second set may be provided based on a determination that the electronic device is in a mode associated with the first persona or the second persona, respectively. For example, if at block 702 the user has selected a personal persona (e.g., user environment for personal use), applications or data that are associated with the personal persona may be provided. If at block 702 the user has selected a work persona (e.g., user environment for work use), applications or data that are associated with the work persona may be provided.

In an embodiment, set of operations 700 may also include a block 708. At block 708, the mode of the electronic device may be switched between the mode associated with the first persona and the mode associated with the second persona. The mode may be switched while the user is logged in to the electronic using the same user information. For example, the user may be logged into the electronic device using his/her user information. While logged in, the user may switch between the personal and work persona modes without logging in using different user information.

In an embodiment, a set of operations 700 may also include a block 710. At block 710, at least a portion of the first set of applications or data, or a second set of applications or data, may be provided in a mode other than a mode associated with the first persona or the second persona, respectively. For example, a portion of applications or data that is associated with a personal persona may be provided while the electronic device is in a work persona mode, or vice versa. The applications or data that are provided in a mode other than its originally-associated mode may be stripped at least partially when being provided. For example, personal schedule from the personal persona that may be provided during a work persona mode may be truncated to show only the time and date of the schedule, without showing the participants or location.

The above-described operations associated with various blocks may be provided in series, in parallel, or in any order. Not all operations associated with the blocks need to be performed, and additional operations may also be performed.

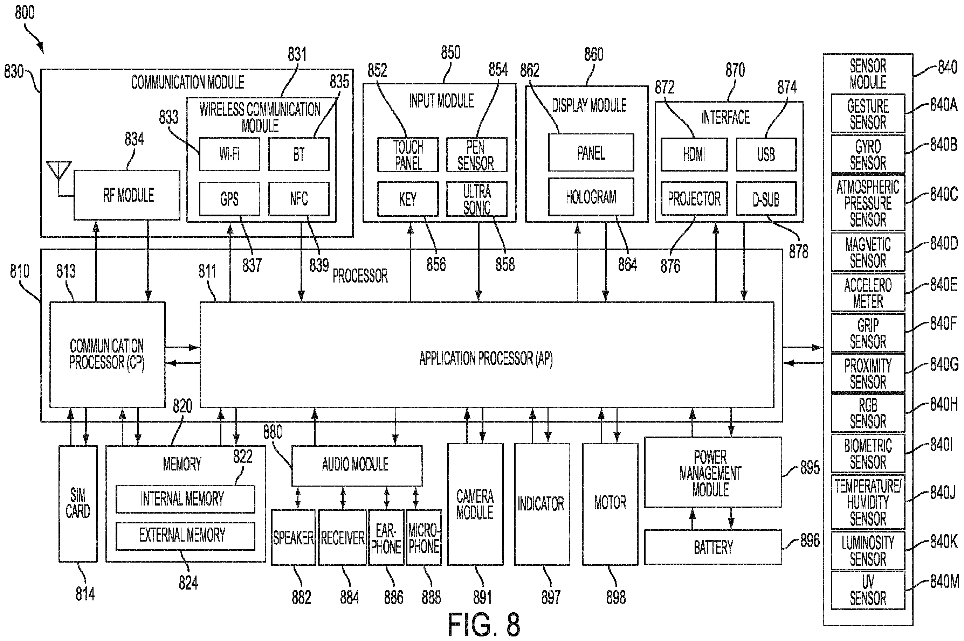

FIG. 8 is a block diagram of hardware 800 according to various embodiments of the present invention. Hardware 800 may be, for example, electronic device 200. Referring to FIG. 8, hardware 800 may include one or more processors 810, subscriber identification module ("SIM") card 814, memory 820, communication module 830, sensor module 840, input module 850, display module 860, interface 870 , audio module 880, camera module 891, power management module 895, battery 896, indicator 897 or motor 898.

Processor 810 (e.g., processor 220) may include one or more application processors ("APs") 811 or one or more communication processors ("CP's"). Processor 810 may be, for example, processor 220. Although FIG. 8 shows that AP 811 and CP 813 are included in processor 810, AP 811 and CP 813 may each be included in different integrated circuit ("IC") packages.

AP 811 may control one or more hardware or software components that are connected to AP 811 or perform processing or computation of data (including multimedia data), by executing an operating system ("OS") or an application program ("app"). AP 811 may be implemented, for example, as a system-on-chip ("SoC"). Processor 810 may further include a graphics processing unit ("GPU"; not shown). Processor 810 may include any combination of AP 811, CP 813 or the GPU.

CP 813 may manage data link associated with communication between an electronic device (e.g., electronic device 200) and one or more other electronic devices, and alter communication protocol. CP 813 may be implemented, for example, as a SoC. According to an embodiment, CP 813 may perform at least a portion of multimedia control functionality. CP 813 may, for example, identify and authenticate an electronic device within a communication network, using a SIM (e.g., SIM card 814). CP 813 may also provide the user with, for example, voice call, video call, text messaging (e.g., short messaging service ("SMS")), or packet data services.

According to an embodiment, AP 811 or CP 813 may process instructions or data received from non-volatile memory by loading the instructions or data into volatile memory. Also, AP 811 or CP 813 may store into the non-volatile memory data received from, or generated by, at least one of other components.

SIM card 814 may be a card implementing a SIM, and may be configured to be inserted into a slot disposed at a specified location of the electronic device. SIM card 814 may include a unique identifier (e.g., integrated circuit card identifier ("ICCID")) or subscriber information (e.g., international mobile subscriber identity ("IMSI")).

Memory 820 may include internal memory 820 or external memory 824. Memory 820 may be, for example, memory 230. Internal memory 822 may be, for example, at least one of volatile memory (e.g., dynamic RAM ("DRAM"), static RAM ("SRAM") or synchronous dynamic RAM ("SDRAM")) or non-volatile memory (e.g., one time programmable ROM ("OTPROM"), programmable ROM ("PROM"), erasable and programmable ROM ("EPROM"), electrically erasable and programmable ROM ("EEPROM"), mask ROM, flash ROM, NAND flash memory or NOR flash memory). According to an embodiment, internal memory 822 may be a solid state drive ("SSD"). External memory 824 may be, for example, a flash drive (e.g., Compact Flash ("CF drive"), secure digital ("SD"), micro Secure Digital ("micro-SD"), mini Secure Digital ("mini-SD") extreme Digital ("xD") or Memory Stick).

Communication module 830 may include wireless communication module 831 and RF module 834. Communication module 830 may be, for example, communication module 260. Wireless communication module 831 may include, for example, Wi-Fi module 833, Bluetooth module 835, GPS module 837 or near-field communication ("NFC") module 839. For example, wireless communication module 831 may provide wireless communication functionality using radio waves having various frequencies. Additionally or alternatively, wireless communication module 831 may include an interface (e.g., a LAN card) or a modem for connecting the hardware 800 to one or more networks such as, for example, Internet, LAN, WAN, telecommunication network, cellular network, satellite network or POTS.

RF module 834 may data transmission and reception functionalities such as, for example, transmitting and receiving RF signals or requested electronic signals. Although not shown, RF module 834 may include a transceiver, a power amp module ("PAM"), a frequency filter or a low noise amplifier ("LNA"). Also, RF module 834 may include one or more components for transmitting and receiving electro-magnetic ("EM") waves in the free space such as, for example, conductors or conductive wires.

Sensor module 840 may include at least one of, for example, gesture sensor 840A, gyro sensor 840B, atmospheric pressure sensor 840C, magnetic sensor 840D, accelerometer 840E, grip sensor 840F, proximity sensor 840G, RGB sensor 840H, biometric sensor 840I, temperature/humidity sensor 840J, luminosity sensor 840K or ultra violet ("UV") sensor 840M. Sensor module 840 may detect the operation state of the electronic device or measure physical properties and convert the detected or measured information into electrical signals. Additionally or alternatively, sensor module 840 may also include, for example, electrical-nose sensor (not shown), electromyography ("EMG") sensor (not shown), electroencephalogram ("EEG") sensor (not shown), or fingerprint sensor. Sensor module 840 may also include control circuitry for controlling one or more sensors included therein.

Input module 850 may include a touch panel 852, (digital) pen sensor 854, key 856 or ultrasonic input device 858. Input module 850 may be, for example, input module 240. Touch panel 852 may detect touch input using, for example, capacitive, resistive, infrared or ultrasonic methods. Touch panel 852 may also include a touch panel controller (not shown). A capacitive-type touch panel may, for example, detect proximity inputs (e.g. hovering input) in addition to, or alternative to, touch inputs. Touch panel 852 may also include a tactile layer. Haptic feedback may be provided to the user using the tactile layer.

(Digital) pen sensor 854 may be implemented, for example, using methods identical to or similar to receiving a touch input from a user, or using a separate detection sheet (e.g., a digitizer). Key 856 may be, for example, a keypad or a touch key. Ultrasonic input device 858 may be a device configured to identify data by detecting, using a microphone (e.g., microphone 888), ultrasonic signals generated by a pen. Ultrasonic input device 858 may detect data wirelessly. According to an embodiment, hardware 800 may receive user input from an external device (e.g., a network, computer or server) connected to hardware 800 using communication module 830.

Display module 860 may include panel 862 or hologram 864. Display module 860 may be, for example, display module 250. Panel 862 may be, for example, a liquid-crystal display ("LCD") or an active-matrix organic light-emitting diode ("AM-OLED") display. Panel 862 may be configured to be, for example, flexible, transparent or wearable. Panel 862 and touch panel 852 may be implemented as a single module. Hologram 864 may utilize the interference of light waves to provide a three-dimensional image in empty space. According to an embodiment, display module 860 may also include a control circuitry for controlling panel 862 or hologram 864.

Interface 870 may include, for example, one or more interfaces for high-definition multimedia interface ("HDMI") 872, universal serial bus ("USB") 874, projector 876 or d-subminiature ("D-sub") 878. Additionally or alternatively, interface 870 may include, for example, one or more interfaces for secure digital ("SD")/multimedia card ("MMC") (not shown) or infrared data association ("IrDA") (not shown).

Audio module 880 may encode/decode voice into electrical signal, and vice versa. Audio 880 may, for example, encode/decode voice information that are input into, or output from, speaker 882, receiver 884, earphone 886 or microphone 888.

Camera module 891 may capture still images or video. According to an embodiment, camera module 891 may include one or more image sensors (e.g., front sensor module or rear sensor module; not shown), an image signal processor ("ISP;" not shown), or a flash light-emitting diode ("flash LED;" not shown).

Power management module 895 may manage electrical power of hardware 800. Although not shown, power management module 895 may include, for example, a power management integrated circuit ("PMIC"), a charger integrated circuit ("charger IC") or a battery fuel gauge.

The PMIC, for example, may be disposed in an integrated circuit or an SoC semiconductor. The charging method for the hardware 800 may include wired or wireless charging. The charger IC may charge a battery, or prevent excessive voltage or excessive current from a charger from entering hardware 800. According to an embodiment, the charger IC may include at least one of a wired charger IC or a wireless charger IC. The wireless charger IC may be, for example, a magnetic resonance type, a magnetic induction type or an electromagnetic wave type, and may include circuits such as, for example, a coil loop, a resonance circuit or a rectifier.

The battery gauge may measure, for example, charge level, voltage while charging, or temperature of battery 896. Battery 896 may supply power to, for example, hardware 800. Battery 896 may be, for example, a rechargeable battery.

Indicator 897 may indicate one or more states (e.g., boot status, message status or charge status) of hardware 800 or a portion thereof (e.g., AP 811). Motor 898 may convert electrical signal into mechanical vibration. MCU 899 may control sensor module 840.

Although not shown, hardware 800 may include one or more devices for supporting mobile television ("mobile TV;" e.g., a graphics processing unit ("GPU")). The devices for supporting mobile TV support processing of media data compliant with, for example, digital multimedia broadcasting ("DMB"), digital video broadcasting ("DVB") or media flow.

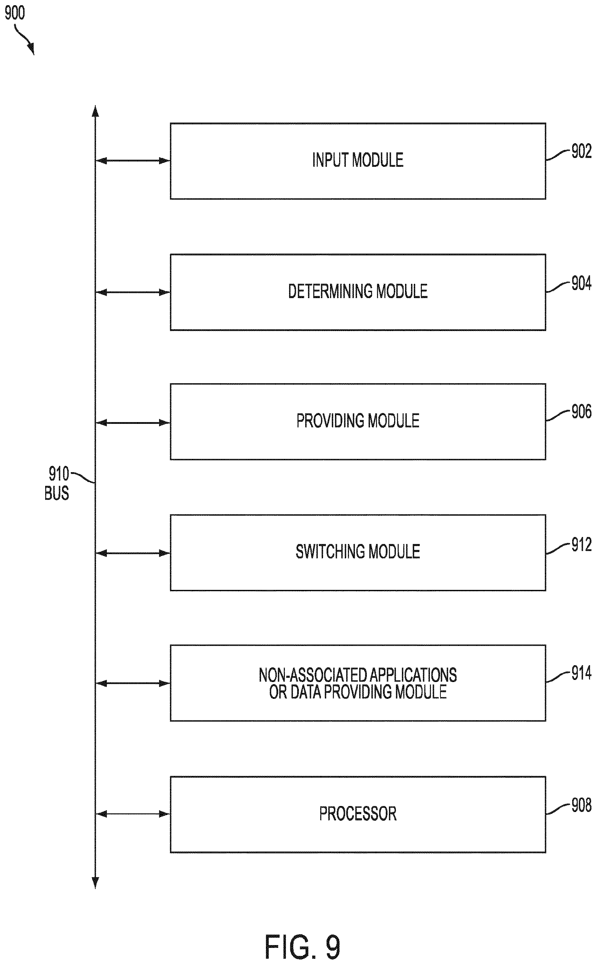

FIG. 9 shows a block diagram of electronic device 900 according various embodiments of the present invention. Electronic device 900 may be, for example, device 100. Electronic device 900 may include input module 902, determining module 904, providing module 906, processor 908 and bus 910. Modules 902, 904, 906 and processor 908 may be coupled with each other via bus 910. Processor 908 may be, for example, processor 220. Although FIG. 9 shows that modules 902, 904 and 906 are coupled with a single processor, modules of electronic device 900 may be coupled with one or more processors, or some or all modules may incorporate one or more processors within respective modules.

Input module 902 may be configured to receive an input associated with a user. The input associated with the user may be, for example, an input for selecting a user environment (e.g., a persona) in which the user wishes to use the electronic device.

Determining module 904 may be configured to determine one or more personas associated with the user. The personas may include a first persona and a second persona. For example, the user may be associated with persona representing a user environment for personal use, and another personal representing a user environment for work use.

Providing module 906 may be configured to provide a first set of applications or data, or a second set of applications or data, in response to the input received by input module 902. The first set or the second set may be provided based on a determination that the electronic device is in a mode associated with the first persona or the second persona, respectively.

In an embodiment, electronic device 900 may also include a switching module 912. Switching module 912 may be configured to switch between the mode associated with the first persona and the mode associated with the second persona. The mode may be switched while the user is logged in to the electronic using the same user information. For example, the user may be logged into the electronic device using his/her user information. While logged in, the user may switch between the personal and work persona modes without logging in using different user information.

In an embodiment, electronic device 900 may also include a non-associated applications or data providing module 914. Module 914 may be independent from providing module 902, or may be incorporated into module 902. Module 914 may be configured to provide at least a portion of the first set of applications or data, or a second set of applications or data, in a mode other than a mode associated with the first persona or the second persona, respectively. For example, a portion of applications or data that is associated with a personal persona may be provided while the electronic device is in a work persona mode, or vice versa. The applications or data that are provided in a mode other than its originally-associated mode may be stripped at least partially when being provided. For example, personal schedule from the personal persona that may be provided during a work persona mode may be truncated to show only the time and date of the schedule, without showing the participants or location.

Components of hardware described above according to the present invention may each include one or more components, and each component's name may vary according to the type of an electronic device. The hardware according to the present invention may include at least one of the above-described components, and some may be omitted or may include additional components. Also, some of the components of the hardware according to the present invention may be combined into a single entity and perform functions identical or similar to those of the respective components before their combination.

The term "module" as used herein may include its ordinary meaning including, but not limited to, for example, a unit of one, or a combination of two or more, hardware, software or firmware. The term "module" may be used interchangeably with terms such as, for example, unit, logic, logical block, component or circuit. A module may be the smallest unit for performing one or more functions, or a portion thereof. A module may be implemented mechanically, or electronically.

For example, a module according to the present invention may include at least one of a known, or to-be-developed, application-specific integrated circuit ("ASIC") chip, field-programmable gate array ("FPGA") or programmable logic device that perform certain operations.

A module according to the present invention may include one or more of the above-described components, may omit a portion thereof, or may include additional components. Operations that are performed by a module, a programming module or other components according to the present invention may be processed in a serial, parallel, repetitive or heuristic manner, and some operations may be omitted or additional operations may be added.

Various embodiments of the present invention may be implemented as a set of program instructions that may be performed by a computer (e.g., executing by processor), and may be recorded in a computer-readable medium. The computer-readable medium may record, for example, program instructions, data files or data structures, either individually or as a combination. That is, it will be appreciated that embodiments of the present invention can be realized in the form of hardware, software or a combination of hardware and software. Any such software may be stored in the form of volatile or non-volatile storage. The program instructions that are recorded on the computer-readable medium may be specifically created implemented for the present invention, or may be well known to a person having ordinary skill in the art.

The computer-readable medium may include hardware devices, for example, magnetic media such as hard disk drive, floppy disk, or tape, optical media such as compact disc read-only memory ("CD-ROM") or digital versatile disc ("DVD"), magneto-optical media such as floptical disk, read-only memory ("ROM"), random access memory ("RAM") or flash memory, that are configured to store program instructions. Program instructions may include machine language code that are produced by a compiler or high-level language code that may be executed by a computer using an interpreter. The functionalities of hardware discussed above may be implemented as one or more software modules, and vice versa.

It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Various embodiments of the present invention are described as examples only and are noted intended to limit the scope of the present invention. Accordingly, the scope of the present invention should be understood as to include any and all modifications that may be made without departing from the scope of the present invention as defined by the appended claims.

## Claims

1. A method comprising:
receiving (702) an input associated with a user via an electronic device (100) corresponding to the user, the input comprising a selection of a persona, wherein a persona comprises a sub-environment under a user environment corresponding to the user;
determining (704) a first persona associated with the user corresponding to the selected persona; and
providing (706), in response to the input, a first set of applications or data corresponding to the determined first persona;
wherein application behavior is restricted based on the determined persona.

2. The method of claim 1, wherein the step of providing (706) comprises allocating a first portion of memory (230) associated with the electronic device to the first persona; and
wherein the first portion of memory (230) differs from a second portion of the memory corresponding to a second persona.

3. The method of claim 1 or claim 2, wherein the step of providing (706) comprises providing a first function corresponding to the first persona of at least one application common to the first set of applications and a second set of applications corresponding to a second persona; and
wherein the first function differs from a second function corresponding to the second persona of the at least one application.

4. The method of any one of the preceding claims, wherein the step of providing (706) comprises applying a first set of security requirements associated with the electronic device (100) and corresponding to the first persona.

5. The method of any one of the preceding claims, further comprising:
logging in the user to the first persona in response to information associated with the user that is the same information usable to log in the user to a second persona.

6. The method of any one of the preceding claims, further comprising:
switching between the first persona and a second persona while logged in using the same user information.

7. The method of any one of the preceding claims, further comprising:
switching between the first persona and a persona associated with another user.

8. The method of any one of the preceding claims, further comprising:
generating at least one of the first and a second persona as a personal persona, wherein a personal persona comprises a persona in which applications are private to the user.

9. The method of any one of the preceding claims, wherein the providing comprises:
storing data associated with the first persona as non-encrypted; and
storing data associated with a second persona as encrypted based at least in part on a token associated with the user,
wherein the token is a password.

10. The method of any one of the preceding claims, wherein the providing (706) comprises:
selectively removing data associated with a second persona while preserving data associated with the first persona.

11. The method of any one of the preceding claims, wherein the step of providing (706) comprises:
presenting data imported into an area associated with the first persona in a presentation format different from a presentation format for presenting data imported into an area associated with a second persona.

12. The method of any one of the preceding claims, wherein the step of providing (706) comprises:
providing at least a portion of a set of applications or data corresponding to a persona other than the first persona.

13. The method of claim 12, wherein the providing comprises:
stripping at least a portion of the provided at least a portion of a set of applications or data.

14. An apparatus (900), comprising:
an input module (902) configured to receive (702) an input associated with a user via an electronic device corresponding to the user, the input comprising a selection of a persona, wherein a persona comprises a sub-environment under a user environment corresponding to the user;
a determining module (904) configured to determine (704) a first persona associated with the user corresponding to the selected persona; and
a providing module (906) configured to provide (706) in response to the input a first set of applications or data corresponding to the determined first persona;
wherein application behavior is restricted based on the determined persona.

15. The apparatus of claim 14, wherein the apparatus is further configured to implement the method of any one of claims 2 to 13.

## Patentansprüche

1. Verfahren, umfassend:
Empfangen (702) einer einem Benutzer zugeordneten Eingabe über eine elektronische Vorrichtung (100), die dem Benutzer entspricht, wobei die Eingabe eine Auswahl einer Persona umfasst, wobei eine Persona eine Subumgebung unter einer Benutzerumgebung umfasst, die dem Benutzer entspricht;
Bestimmen (704) einer ersten Persona, die dem Benutzer zugeordnet ist, der der ausgewählten Persona entspricht; und
Bereitstellen (706) einer ersten Gruppe von Applikationen oder Daten entsprechend der bestimmten ersten Persona als Reaktion auf die Eingabe;
wobei das Applikationsverhalten basierend auf der bestimmten Persona beschränkt ist.

2. Verfahren nach Anspruch 1, wobei der Schritt des Bereitstellens (706) das Zuweisen eines ersten Teils eines Speichers (230), welcher der elektronischen Vorrichtung zugeordnet ist, zu der ersten Persona; und
wobei sich der erste Teil des Speichers (230) von einem zweiten Teil des Speichers unterscheidet, welcher einer zweiten Persona entspricht.

3. Verfahren nach Anspruch 1 oder 2, wobei der Schritt des Bereitstellens (706) das Bereitstellen einer ersten Funktion umfasst, die der ersten Persona mindestens einer Applikation entspricht, welche die erste Gruppe von Applikationen und eine zweite Gruppe von Applikationen, die einer zweiten Persona entsprechen, gemeinsam haben; und
wobei sich die erste Funktion von einer zweiten Funktion unterscheidet, die der zweiten Persona der mindestens einen Applikation entspricht.

4. Verfahren nach einem der vorstehenden Ansprüche, wobei der Schritt des Bereitstellens (706) das Anwenden einer ersten Gruppe von Sicherheitsanforderungen umfasst, die der elektronischen Vorrichtung (100) zugeordnet sind und der ersten Persona entsprechen.

5. Verfahren nach einem der vorstehenden Ansprüche, ferner umfassend:
Anmelden des Benutzers unter der ersten Persona als Reaktion auf dem Benutzer zugeordneten Informationen, bei denen es sich um die gleichen Informationen handelt, die zum Anmelden des Benutzers unter einer zweiten Persona verwendet werden können.

6. Verfahren nach einem der vorstehenden Ansprüche, ferner umfassend:
Wechseln zwischen der ersten Persona und einer zweiten Persona im angemeldeten Zustand unter Verwendung der gleichen Benutzerinformationen.

7. Verfahren nach einem der vorstehenden Ansprüche, ferner umfassend:
Wechseln zwischen der ersten Persona und einer zweiten Persona, die einem anderen Benutzer zugeordnet ist.

8. Verfahren nach einem der vorstehenden Ansprüche, ferner umfassend:
Erzeugen mindestens einer Persona der ersten und einer zweiten Persona als eine private Persona, wobei eine private Persona eine Persona umfasst, bei der Applikationen für den Benutzer vertraulich sind.

9. Verfahren nach einem der vorstehenden Ansprüche, wobei das Bereitstellen folgendes umfasst:
Speichern von Daten, die der ersten Persona zugeordnet sind, als unverschlüsselte Daten; und
Speichern von Daten, die einer zweiten Persona zugeordnet sind, als verschlüsselte Daten, wenigstens teilweise auf der Basis eines dem Benutzer zugeordneten Tokens,
wobei der Token ein Passwort ist.

10. Verfahren nach einem der vorstehenden Ansprüche, wobei das Bereitstellen (706) folgendes umfasst:
selektives Entfernen von Daten, die einer zweiten Persona zugeordnet sind, während die der ersten Persona zugeordneten Daten weiter erhalten bleiben.

11. Verfahren nach einem der vorstehenden Ansprüche, wobei der Schritt des Bereitstellens (706) folgendes umfasst:
Darstellen von in einen der ersten Persona zugeordneten Bereich importierten Daten in einem Darstellungsformat, das sich von einem Darstellungsformat zur Darstellung von in einen einer zweiten Persona zugeordneten Bereich importierten Daten unterscheidet.

12. Verfahren nach einem der vorstehenden Ansprüche, wobei der Schritt des Bereitstellens (706) folgendes umfasst:
Bereitstellen mindestens eines Teils einer Gruppe von Applikationen oder Daten an eine andere Persona als die erste Persona.

13. Verfahren nach Anspruch 12, wobei das Bereitstellen folgendes umfasst:
Zerlegen wenigstens eines Teils des bereitgestellten mindestens einen Teils einer Gruppe von Applikationen oder Daten.

14. Vorrichtung (900), umfassend:
ein Eingabemodul (902), das zum Empfangen (702) einer einem Benutzer zugeordneten Eingabe über eine elektronische Vorrichtung, die dem Benutzer entspricht, gestaltet ist, wobei die Eingabe eine Auswahl einer Persona umfasst, wobei eine Persona eine Subumgebung unter einer Benutzerumgebung umfasst, die dem Benutzer entspricht;
ein Bestimmungsmodul (904), das zum Bestimmen (704) einer ersten Persona gestaltet, die dem Benutzer zugeordnet ist, der der ausgewählten Persona entspricht; und
ein Bereitstellungsmodul (906), das zum Bereitstellen (706) einer ersten Gruppe von Applikationen oder Daten entsprechend der bestimmten ersten Persona als Reaktion auf die Eingabe gestaltet ist;
wobei das Applikationsverhalten basierend auf der bestimmten Persona beschränkt ist.

15. Vorrichtung nach Anspruch 14, wobei die Vorrichtung ferner zum Implementieren des Verfahrens nach einem der Ansprüche 2 bis 13 gestaltet ist.

## Revendications

1. Procédé comprenant les étapes suivantes :
réception (702) d'une entrée associée à un utilisateur par l'intermédiaire d'un dispositif électronique (100) correspondant à l'utilisateur, l'entrée comprenant une sélection d'une persona, une persona comprenant un sous-environnement dans un environnement utilisateur correspondant à l'utilisateur ;
détermination (704) d'une première persona associée à l'utilisateur correspondant à la persona sélectionnée ; et
fourniture (706), en réponse à l'entrée, d'un premier ensemble d'applications ou de données correspondant à la première persona déterminée ;
le comportement de l'application étant limité sur la base de la persona déterminée.

2. Procédé selon la revendication 1, la fourniture (706) comprenant l'allocation d'une première partie de mémoire (230) associée au dispositif électronique à la première persona ; et
la première partie de mémoire (230) différant d'une seconde partie de la mémoire correspondant à une seconde persona.

3. Procédé selon la revendication 1 ou 2, la fourniture (706) comprenant la fourniture d'une première fonction correspondant à la première persona d'au moins une application commune au premier ensemble d'applications et à un second ensemble d'applications correspondant à une seconde persona ; et
la première fonction différant d'une seconde fonction correspondant à la seconde persona de l'au moins une application.

4. Procédé selon l'une quelconque des revendications précédentes, la fourniture (706) comprenant l'application d'un premier ensemble d'exigences de sécurité associées au dispositif électronique (100) et correspondant à la première persona.

5. Procédé selon l'une quelconque des revendications précédentes, comprenant en outre l'étape suivante :
connexion de l'utilisateur à la première persona en réponse aux informations associées à l'utilisateur qui sont les mêmes informations utilisables pour la connexion de l'utilisateur à une seconde persona.

6. Procédé selon l'une quelconque des revendications précédentes, comprenant en outre l'étape suivante :
commutation entre la première persona et une seconde persona pendant la connexion à l'aide des mêmes informations utilisateur.

7. Procédé selon l'une quelconque des revendications précédentes, comprenant en outre :
commutation entre la première persona et une persona associée à un autre utilisateur.

8. Procédé selon l'une quelconque des revendications précédentes, comprenant en outre l'étape suivante :
génération de la première et/ou d'une seconde persona en tant que persona personnelle, une persona personnelle comprenant une persona dans lequel les applications sont privées à l'utilisateur.

9. Procédé selon l'une quelconque des revendications précédentes, la fourniture comprenant les étapes suivantes :
stockage des données associées à la première persona en tant que données non cryptées ; et
stockage de données associées à une seconde persona sous forme cryptée sur la base, au moins en partie, d'un jeton associé à l'utilisateur,
le jeton étant un mot de passe.

10. Procédé selon l'une quelconque des revendications précédentes, la fourniture (706) comprenant l'étape suivante :
suppression sélective des données associées à une seconde persona tout en préservant les données associées à la première persona.

11. Procédé selon l'une quelconque des revendications précédentes, la fourniture (706) comprenant l'étape suivante :
présentation des données importées dans une zone associée à la première persona dans un format de présentation différent d'un format de présentation pour présenter les données importées dans une zone associée à une seconde persona.

12. Procédé selon l'une quelconque des revendications précédentes, la fourniture (706) comprenant l'étape suivante :
fourniture au moins une partie d'un ensemble d'applications ou de données correspondant à une persona autre que la première persona.

13. Procédé selon la revendication 12, la fourniture comprenant l'étape suivante :
retrait d'au moins une partie de l'au moins une partie fournie d'un ensemble d'applications ou de données.

14. Appareil (900), comprenant :
un module d'entrée (902) conçu pour recevoir (702) une entrée associée à un utilisateur par l'intermédiaire d'un dispositif électronique correspondant à l'utilisateur, l'entrée comprenant une sélection d'une persona, une persona comprenant un sous-environnement dans un environnement utilisateur correspondant à l'utilisateur ;
un module de détermination (904) conçu pour déterminer (704) une première persona associée à l'utilisateur correspondant à la persona sélectionnée ; et
un module de fourniture (906) conçu pour fournir (706), en réponse à l'entrée, un premier ensemble d'applications ou de données correspondant à la première persona déterminée ;
le comportement de l'application étant limité sur la base de la persona déterminée.

15. Appareil selon la revendication 14, l'appareil étant en outre conçu pour mettre en œuvre le procédé selon l'une quelconque des revendications 2 à 13.
